# FASCICULE DE BREVET EUROPEEN

(11) **EP 3 990 882 B1**
(45) Date de publication et mention de la délivrance du brevet: **09.07.2025**
(21) Numéro de dépôt: 20734063.9
(22) Date de dépôt: 26.06.2020
(51) Int. Cl.: G01M 3/28, G01M 3/34

(54) **PROCEDE DE TEST D'ETANCHEITE DE MEMBRANE ETANCHE**
VERFAHREN ZUM PRÜFEN DER ABDICHTUNG EINER GEDICHTETEN MEMBRAN
METHOD FOR TESTING THE SEAL OF A SEALED MEMBRANE

(30) Priorité: 28.06.2019 FR 1907204
(43) Date de publication de la demande: 04.05.2022
(73) Titulaire: GAZTRANSPORT ET TECHNIGAZ, 78470 Saint-Rémy-lès-Chevreuse (FR)
(72) Inventeur: GIMBERT, Charles, 78470 Saint Rémy lès Chevreuse (FR); HASSLER, David, 78470 Saint Rémy lès Chevreuse (FR); FRAYSSE, Vincent, 78470 Saint Rémy lès Chevreuse (FR); PRIOLEAU, Rémy, 78470 Saint Rémy lès Chevreuse (FR); TOS, Gaël, 78470 Saint Rémy lès Chevreuse (FR); KRAIEM, Inès, 78470 Saint Rémy lès Chevreuse (FR); ZAHRA, Jean, 78470 Saint Rémy lès Chevreuse (FR)
(74) Mandataire: Loyer & Abello
(86) Numéro de dépôt international: PCT/EP2020/068008
(87) Numéro de publication internationale: WO 2020/260572

(56) Documents cités:
- EP-A1- 0 780 623
- WO-A1-2014/076424
- US-A1- 2013 087 570

## Description

### Domaine technique

L'invention se rapporte au domaine des cuves étanches et thermiquement isolantes, à membranes. En particulier, l'invention se rapporte au domaine des cuves étanches et thermiquement isolantes pour le stockage et/ou le transport de gaz liquéfié à basse température, telles que des cuves pour le transport de Gaz de Pétrole Liquéfié (aussi appelé GPL) présentant par exemple une température comprise entre -50°C et 0°C, ou pour le transport de Gaz Naturel Liquéfié (GNL) à environ -162°C à pression atmosphérique. Ces cuves peuvent être installées à terre ou sur un ouvrage flottant. Dans le cas d'un ouvrage flottant, la cuve peut être destinée au transport de gaz liquéfié ou à recevoir du gaz liquéfié servant de carburant pour la propulsion de l'ouvrage flottant.

Dans un mode de réalisation, le gaz liquéfié est du GNL, à savoir un mélange à forte teneur en méthane stocké à une température d'environ -162°C à la pression atmosphérique. D'autres gaz liquéfiés peuvent aussi être envisagés, notamment l'éthane, le propane, le butane ou l'éthylène mais aussi l'hydrogène. Des gaz liquéfiés peuvent aussi être stockés sous pression, par exemple à une pression relative comprise entre 2 et 20 bars, et en particulier à une pression relative voisine de 2 bars. La cuve peut être réalisée selon différentes techniques, notamment sous la forme d'une cuve intégrée à membrane.

### Arrière-plan technologique

Une cuve étanche et thermiquement isolante de stockage de gaz naturel liquéfié agencée dans une structure porteuse présente une structure multicouche, à savoir de l'extérieur vers l'intérieur de la cuve, une barrière thermiquement isolante secondaire ancrée contre la structure porteuse, une membrane d'étanchéité secondaire qui repose sur la barrière thermiquement isolante secondaire, une barrière thermiquement isolante primaire qui repose sur la membrane d'étanchéité secondaire et une membrane d'étanchéité primaire qui repose sur la barrière thermiquement isolante primaire et qui est destinée à être en contact avec le gaz naturel liquéfie stocké dans la cuve.

Le document FR2903165 décrit une cuve étanche et thermiquement isolante dans laquelle des éléments préfabriqués sont ancrés dans l'espace interne de la structure porteuse afin de former la cuve. Chaque élément préfabriqué comporte une portion de barrière thermiquement isolante secondaire, une portion de membrane d'étanchéité secondaire et une portion de barrière thermiquement isolante primaire. Ces éléments préfabriqués sont ancrés selon un maillage régulier sur la structure porteuse.

La portion de barrière thermiquement isolante primaire d'un bloc préfabriqué ne recouvre que partiellement la membrane d'étanchéité secondaire. Ainsi, une portion périphérique de la membrane d'étanchéité secondaire desdits blocs préfabriqués est apparente. Un film étanche souple est fixé sur ladite portion périphérique de la membrane d'étanchéité secondaire de deux éléments préfabriqués adjacents afin d'assurer la continuité de la membrane d'étanchéité secondaire.

Lors de la fabrication de la cuve, des tests sont réalisés afin de s'assurer de l'étanchéité de la membrane d'étanchéité secondaire. Dans certains cas, ces tests d'étanchéité doivent être réalisés sur des portions de cuves seulement.

Par exemple, dans le cadre d'une cuve de petite taille telle qu'une cuve de réservoir en carburant d'alimentation d'un navire, la partie inférieure de la cuve est montée dans un premier temps à partir de blocs préfabriqués puis des échafaudages sont installés pour finaliser la fabrication de la cuve. Il est alors nécessaire de tester l'étanchéité de la membrane d'étanchéité secondaire sur la partie inférieure de la cuve alors que la cuve n'est que partiellement fabriquée.

De même, lors de la fabrication d'une cuve de méthanier, une ouverture latérale est obstruée en fin de fabrication de la cuve en rapportant une portion de structure porteuse sur laquelle une portion de cuve est montée. Il est alors nécessaire de contrôler de façon indépendante l'étanchéité de la membrane d'étanchéité secondaire de la portion de cuve rapportée.

Cependant, un tel test d'étanchéité de la membrane d'étanchéité secondaire d'une portion de cuve est complexe et nécessite de nombreuses manipulations et vérifications. En particulier, du fait que ce test n'est réalisé que sur une portion de cuve non finalisée, la membrane d'étanchéité secondaire ne forme pas un espace étanche clos permettant de façon simple et directe un test d'étanchéité.

Le document WO2014076424 décrit un procédé de fabrication d'une paroi de cuve étanche et thermiquement isolée dans lequel on utilise des structures mécano-soudées pour former un espace clos entre une membrane d'étanchéité secondaire et la structure porteuse de manière à tester l'étanchéité de la membrane d'étanchéité secondaire. De telles structures mécano-soudées sont complexes à mettre en œuvre.

### Résumé

Une idée à la base de l'invention est de fournir un procédé de test d'étanchéité de membrane d'étanchéité qui soit simple à mettre en oeuvre. En particulier, une idée à la base de l'invention est de fournir un tel procédé de test d'étanchéité permettant de contrôler l'étanchéité de la membrane d'étanchéité d'une portion de cuve non finalisée, c'est-à-dire d'une portion de cuve destinée à être associée à une ou plusieurs autres portions de cuve en vue de finaliser la fabrication de ladite cuve. Une idée à la base de l'invention est de permettre ce test d'étanchéité de façon fiable et rapide.

Pour cela, l'invention fournit un procédé de test d'étanchéité d'une membrane d'étanchéité, la membrane d'étanchéité étant fixée sur une barrière thermiquement isolante, la barrière thermiquement isolante reposant sur une surface de support étanche, le procédé comportant :
- appliquer une première bande de mastic étanche sur la membrane d'étanchéité,
- appliquer une deuxième bande de mastic étanche sur la surface de support autour de la membrane d'étanchéité,
- disposer une couverture étanche sur la première bande de mastic étanche et sur la deuxième bande de mastic étanche de sorte que d'une part la couverture étanche soit liée de manière étanche à la membrane d'étanchéité par la première bande de mastic étanche et que, d'autre part, la couverture étanche soit liée de manière étanche à la surface de support par la deuxième bande de mastic étanche, la couverture étanche, la surface de support, la première bande de mastic étanche, la deuxième bande de mastic étanche et la membrane d'étanchéité délimitant conjointement un espace clos,
- mettre en dépression l'espace clos par rapport à un environnement extérieur audit espace clos ; et
- mesurer un paramètre représentatif de l'évolution de la pression à l'intérieur de l'espace clos après la mise en dépression dudit espace clos..

Grâce à ces caractéristiques, il est possible de tester l'étanchéité de la membrane d'étanchéité d'une portion de cuve en cours de fabrication de façon simple et fiable. En particulier, l'application de bandes de mastic étanches et l'agencement de la couverture étanche de manière étanche sur la membrane d'étanchéité et sur la surface de support au moyen des bandes de mastic étanche permet de réaliser un espace clos de façon simple et rapide sans nécessiter de manipulations complexes. En particulier, cet espace clos est obtenu sans nécessiter de soudures de pièces métalliques sur la membrane d'étanchéité et/ou sur la surface de support.

Selon des modes de réalisation, un tel procédé de test d'étanchéité peut comporter une ou plusieurs des caractéristiques suivantes.

Une bande de mastic étanche peut prendre différentes formes. Elle est avantageusement fournie sous la forme d'un rouleau déroulé pour appliquer la bande de mastic étanche sur la surface désirée mais peut également, à titre d'exemple, être réalisée à partir de cartouches employées avec un pistolet à mastic ou être réalisée à partir d'un matériau en vrac. Une telle bande de mastic étanche se présente sous une forme allongée et est appliquée de manière à entourer une portion de la membrane d'étanchéité dont l'étanchéité doit être testée.

Selon un mode de réalisation, une bande de mastic étanche est par exemple un ruban adhésif. Selon un mode de réalisation, la première bande de mastic étanche et/ou la deuxième bande de mastic étanche comporte un film et une couche de mastic étanche sur une face dudit film. Selon un mode de réalisation, la couche de mastic étanche est en caoutchouc, de préférence en caoutchouc synthétique. Selon un mode de réalisation, la couche de mastic étanche présente une épaisseur comprise entre 1 et 4 mm, par exemple 3mm. Selon un mode de réalisation, la première bande de mastic étanche et/ou la deuxième bande de mastic étanche est réalisée par une superposition de couches de mastic étanche.

Selon un mode de réalisation, la bande de mastic étanche est réalisée en mastic butyle, c'est-à-dire un mastic plastique à base de polyisobutène.

De préférence, la barrière secondaire rigide, autrement désigné par l'acronyme RSB (« Rigid Secondary Barrier ») ou Triplex^{®}, présente une contrainte à la rupture en cisaillement, déterminée à -170 °C selon la norme ISO4587, comprise entre 17 et 30 MPa et de préférence supérieure à 22 MPa.

Selon un mode de réalisation, la bande de mastic étanche est un cordon de mastic étanche adhésif, par exemple en mastic étanche appliqué à l'aide d'un pistolet à mastic ou tout autre dispositif permettant d'appliquer sur la longueur souhaitée un boudin de mastic étanche présentant les dimensions de longueur, épaisseur, section ou autres souhaitées. Selon un mode de réalisation, la première bande de mastic étanche et/ou la deuxième bande de mastic étanche sont réalisées à partir d'un cordon de mastic présentant une épaisseur comprise entre 1 mm et 15 mm, de préférence entre 2 mm et 10 mm. Un tel cordon de mastic permet avantageusement de rattraper des défauts de planéité de la surface de support.

Selon un mode de réalisation, la première bande de mastic étanche est fixée sur une portion périphérique de la membrane d'étanchéité, ladite portion périphérique de la membrane d'étanchéité entourant une portion centrale de la membrane d'étanchéité dont l'étanchéité doit être testée.

Selon un mode de réalisation, la membrane d'étanchéité comporte au moins une portion de film composite étanche, le procédé comportant en outre une étape d'application d'une couche adhésive sur une face de ladite au moins une portion de film composite de manière à ce que ladite couche adhésive s'imprègne dans la portion de film composite, la première bande de mastic étanche étant appliquée sur ladite face de ladite au moins une portion de film composite.

Une telle couche adhésive imprégnant la portion de film composite étanche permet une bonne coopération entre la première bande de mastic étanche et la membrane d'étanchéité y compris au niveau de la portion de film composite étanche, en particulier lorsque ce film composite étanche est un film composite souple tel que décrit ci-après. En effet, un tel film composite étanche peut présenter des irrégularités, par exemple liées à la présence de fibres apparentes. Ces irrégularités peuvent dégrader la coopération étanche entre la première bande de mastic étanche et la membrane d'étanchéité au niveau du film composite étanche. Ainsi, une telle couche adhésive s'imprégnant dans le film composite étanche adhère de façon satisfaisante à la portion de film composite étanche tout en offrant une surface d'adhésion et de coopération satisfaisante à la première bande de mastic étanche. Ceci est particulièrement intéressant lorsque la portion de film composite souple étanche comporte des couches de fibres de verre non résinées sur lesquelles n'adhèrent pas correctement la première bande de mastic étanche.

Selon un mode de réalisation, la couche adhésive est une couche de colle de polyuréthane.

Selon un mode de réalisation, la première bande de mastic étanche est adhésive. Selon un mode de réalisation, la deuxième bande de mastic étanche est adhésive.

De telles bandes de mastic étanche adhésives facilitent le procédé de test d'étanchéité. En effet, de telles bandes de mastic étanche adhésives assurent une liaison étanche de manière simple et fiable entre lesdites bandes de mastic étanche adhésives et d'une part la membrane d'étanchéité ou la surface de support et, d'autre part, la couverture étanche. En outre, de telles bandes de mastic étanche adhésives peuvent être fixées de façon rapide, fiable et étanche sur la membrane d'étanchéité comme sur la surface de support.

Selon un mode de réalisation, la première bande de mastic étanche est en caoutchouc synthétique. Selon un mode de réalisation, la deuxième bande de mastic étanche est en caoutchouc synthétique.

Selon l'invention, la couverture étanche est une bâche de film polymère.

Selon un mode de réalisation, la bâche de film polymère est dans un matériau choisi parmi le vinyle, le nylon et le polyéthylène.

Une telle bâche de film polymère est simple et rapide à fabriquer et à dimensionner pour former la couverture étanche. En outre, une telle bâche de film polymère est simple à installer tout en offrant des propriétés d'étanchéité et de résistance satisfaisantes lors de la mise en dépression de l'espace clos.

Selon un mode de réalisation, le procédé comporte en outre une étape de positionner un écran couvrant un interstice entre la barrière thermiquement isolante et la surface de support afin d'empêcher la bâche de film polymère de se positionner dans ledit interstice lors de la mise en dépression de l'espace clos.

Un tel écran permet d'obstruer un interstice entre la barrière thermiquement isolante et la surface de support. En effet, dans le cadre d'une cuve intégrée à une structure porteuse telle qu'une double coque de navire, des cordons de mastic sont généralement intercalés entre la barrière thermiquement isolante et la surface de support formée par la coque interne du navire afin de rattraper les défauts de planéité de la structure porteuse. Ainsi, un espace peut séparer la barrière thermiquement isolante de la surface de support. Un tel écran permet d'éviter que la bâche de film polymère ne se dégrade en s'insérant dans cet espace lors de la mise en dépression de l'espace clos.

Selon un mode de réalisation, l'écran est une plaque par exemple en matière plastique.

Selon un mode de réalisation, le procédé comporte une étape de positionner une cornière de protection comportant une première aile plane et une deuxième aile plane de sorte que la première aile plane soit disposée contre la membrane d'étanchéité et que la deuxième aile plane longe un bord de la barrière thermiquement isolante et fasse saillie en direction de la surface de support.

Selon un mode de réalisation, l'écran s'étend dans la direction d'épaisseur de la paroi de cuve, en direction de l'intérieur de la cuve, au-delà du bord de la deuxième aile plane de la cornière de protection. Ceci qui permet d'éviter que la bâche de film polymère ne vienne en contact contre une garniture isolante de la barrière thermiquement isolante.

Selon un mode de réalisation, l'écran comporte une cornière reposant d'une part contre la barrière thermiquement isolante et, d'autre part, contre la surface de support de manière à former une surface d'appui plane entre la barrière thermiquement isolante et la surface de support, la deuxième bande de mastic étanche étant appliquée sur la surface de support de manière à entourer la cornière de sorte que ladite cornière soit logée dans l'espace clos, la bâche de film polymère étant amenée en appui contre ladite surface d'appui plane lors de la mise en dépression dudit espace clos.

Selon un mode de réalisation, un tissu de renforcement est fixé à la bâche de film polymère, la bâche étant fixée de manière à ce que le tissu de renforcement soit positionné dans l'espace clos au niveau d'un angle formé par la barrière thermiquement isolante.

Un tel tissu de renforcement permet d'éviter une dégradation de la bâche en film polymère lors de la mise en dépression de l'espace clos. En effet, une telle bâche en film polymère est relativement fine et peut se dégrader lors de la mise en dépression de l'espace clos, ladite mise en dépression de l'espace clos amenant la bâche de film polymère au contact d'angles saillants formés par la barrière thermiquement isolante. En outre, la face latérale de la barrière thermiquement isolante peut présenter une certaine rugosité, par exemple lorsque cette face latérale de la barrière thermiquement isolante est formée par une garniture isolante comportant des fibres de renforcement. Une telle rugosité est également susceptible de dégrader la bâche de film polymère lors de la mise en dépression de l'espace clos. Ce tissu de renforcement permet ainsi de protéger la bâche de film polymère lors de la mise en dépression de l'espace clos.

Selon un mode de réalisation, la barrière thermiquement isolante comporte une pluralité de blocs préfabriqués juxtaposés selon un motif régulier. Selon un mode de réalisation, la membrane d'étanchéité comporte une pluralité de portions de film étanche rigide, chaque portion de film étanche rigide étant intégrée à un bloc préfabriqué correspondant. Selon un mode de réalisation, une portion de film étanche rigide, de préférence chaque portion de film étanche rigide, comporte une feuille d'aluminium intercalée entre deux couches de fibres de verre et de résine, un tel film étanche rigide étant notamment commercialisé sous l'appellation Triplex^{®} rigide. Selon un mode de réalisation, la membrane d'étanchéité comporte une ou plusieurs portions de film composite souple et étanche. Selon un mode de réalisation, ladite ou lesdites portions de film composite souple sont fixées de manière étanche, par exemple par collage, sur des portions de film étanche rigides de deux blocs préfabriqués adjacents. Selon un mode de réalisation, la ou les portions de film composite souple comportent une feuille d'aluminium intercalée entre deux couches de fibres de verre non résinée, une telle portion de film composite souple étant notamment commercialisée sous l'appellation Triplex^{®} souple. Selon un mode de réalisation, la portion de film composite étanche sur laquelle est appliquée la couche adhésive est une portion de film composite souple.

Selon un mode de réalisation, la première bande de mastic étanche est appliquée sur la membrane d'étanchéité après que la membrane d'étanchéité ait été fixée sur le barrière thermique isolante.

Dans un mode de réalisation, la première bande de mastic étanche est appliquée directement contre le film étanche rigide.

Dans un mode de réalisation, la première bande de mastic étanche est appliquée indirectement par l'intermédiaire d'une couche adhésive sur le film étanche souple.

Selon un mode de réalisation, le procédé comporte en outre les étapes de retirer la couverture étanche, retirer la première bande de mastic étanche et retirer la deuxième bande de mastic étanche postérieurement à l'étape de mesure du paramètre représentatif de l'évolution de la pression dans l'espace clos. Selon un mode de réalisation, le procédé comporte en outre une étape de ponçage de la couche adhésive. Ce ponçage de la couche adhésive permet de retirer toute pollution résultant de l'application de la couche adhésive sur la membrane d'étanchéité.

Selon un mode de réalisation non couvert par les revendications, la couverture étanche comporte une structure métallique étanche.

Une telle structure métallique présente une bonne fiabilité lors du test d'étanchéité tout en permettant une étanchéité de l'espace clos de façon simple et rapide en agençant ladite structure métallique sur les bandes de mastic étanche. Par ailleurs, une telle structure métallique présente un poids permettant sa coopération de manière étanche avec les bandes de mastic étanche de façon simple et efficace.

Selon un mode de réalisation non couvert par les revendications, la structure métallique comporte
- une portion centrale,
- un rebord interne plan, et
- un rebord externe plan,

et le rebord interne plan se développe dans un premier plan parallèle à la membrane d'étanchéité et le rebord externe plan se développe dans un deuxième plan parallèle à la surface de support,
et la couverture étanche est agencée de sorte que la première bande de mastic étanche soit intercalée de manière étanche entre le rebord interne plan et la membrane d'étanchéité et de sorte que la deuxième bande de mastic étanche soit intercalée de manière étanche entre le rebord externe plan et la surface de support.

Selon un mode de réalisation non couvert par les revendications, la structure métallique est en Inox.

Selon un mode de réalisation non couvert par les revendications, la portion centrale est plane. Selon un mode de réalisation, la portion centrale se développe dans un plan parallèle à la direction d'épaisseur de la paroi de cuve.

Selon un mode de réalisation non couvert par les revendications, le rebord interne se développe dans un premier plan et le rebord externe se développe dans un deuxième plan, le première plan et le deuxième plan formant un angle correspondant à l'angle entre la membrane d'étanchéité et la surface de support.

Selon un mode de réalisation non couvert par les revendications, le rebord interne plan se développe perpendiculairement à la portion centrale plane. Selon un mode de réalisation, le rebord externe plan se développe perpendiculairement à la portion centrale plane. Selon un mode de réalisation, le rebord interne plan se développe depuis un premier bord de la portion centrale plane d'un premier côté de ladite portion centrale plane et le rebord externe plan se développe depuis un deuxième bord de la portion centrale plane d'un deuxième côté de la portion centrale plane, le premier bord de la portion centrale plane étant opposé au deuxième bord de la portion centrale plane, le premier côté de la portion centrale plane étant opposé au deuxième côté de la portion centrale plane.

Selon un mode de réalisation non couvert par les revendications, une pluralité de structures métalliques telles que ci-dessus sont agencés entre la membrane d'étanchéité et la surface de support, des bandes de mastic étanche supplémentaires étant agencée de manière étanche entre deux structures métalliques successives de la couverture étanche.

Selon un mode de réalisation non couvert par les revendications, la structure métallique comporte une partie interne et une partie externe, la portion interne comportant le rebord interne plan et une première partie de la portion centrale, la partie externe comportant le rebord externe plan et une deuxième partie de la portion centrale,
et l'étape de disposer la couverture étanche comporte les étapes de :
- agencer la première partie de la structure métallique de sorte que le rebord interne plan repose sur la première bande de mastic étanche,
- agencer la deuxième partie de la structure métallique de sorte que le rebord externe plan repose sur la deuxième bande de mastic étanche, et
- lier de manière étanche la première partie de la structure métallique et la deuxième partie de la structure métallique.

Une telle structure métallique en deux parties permet avantageusement de rattraper les écarts liés aux tolérances de fabrications de la portion de cuve et/ou des parties de la structure métallique. En particulier, la première partie et la deuxième partie de la portion centrale peuvent se chevaucher plus ou moins pour former la portion centrale et rattraper ainsi les écarts résultant des tolérances de fabrication de la structure métallique ou de la barrière thermiquement isolante ou encore les défauts de planéité de la surface de support.

La première partie de la structure métallique et la deuxième partie de la structure métallique peuvent être reliées de manière étanche de nombreuses manières. Selon un mode de réalisation, la première partie de la structure métallique et la deuxième partie de la structure métallique sont liées de manière étanche par soudure. Selon un mode de réalisation, la première partie de la structure métallique et la deuxième partie de la structure métallique sont liées de manière étanche par une bande de mastic étanche.

Selon un mode de réalisation, le procédé comporte en outre une étape d'application d'une force d'appui en direction de la surface de support sur la couverture étanche au droit de la première bande de mastic étanche et au droit de la deuxième bande de mastic étanche.

L'application d'une telle force d'appui sur la couverture étanche au droit des bandes de mastic étanche assure une bonne coopération et une bonne étanchéité entre la couverture étanche et la membrane d'étanchéité et/ou la surface de support.

Selon un mode de réalisation, le procédé comporte en outre une étape de fixer une contre-forme au niveau d'un angle de la barrière thermiquement isolante de sorte que ladite contre-forme recouvre ledit angle, la contre-forme étant liée de manière étanche d'une part sur la surface de support et, d'autre part, à la membrane d'étanchéité secondaire.

Selon un mode de réalisation, la couverture étanche comporte la contre-forme. Selon un mode de réalisation, la contre-forme est logée dans l'espace clos.

Selon un mode de réalisation, la contre-forme est une pièce métallique, par exemple en Inox. La contre forme peut être fixée de nombreuses manières sur la membrane d'étanchéité ou sur la surface de support. Selon un mode de réalisation, la contre-forme est soudée sur la surface de support. Selon un mode de réalisation, la contre-forme est liée de manière étanche à la surface de support et/ou à la membrane d'étanchéité au moyen d'une bande de mastic étanche telle que la première bande de mastic étanche et/ou, respectivement, la deuxième bande de mastic étanche.

Selon un mode de réalisation, l'angle recouvert par la contre-forme est un angle saillant de la barrière thermiquement isolante.

Selon un mode de réalisation, l'angle présente une arête se développant selon une direction d'épaisseur de la cuve, la contre-forme présentant une première aile plane recouvrant une portion d'une première face latérale de la barrière thermiquement isolante et une deuxième aile plane recouvrant une portion d'une deuxième face latérale de la barrière thermiquement isolante, lesdites portions de la première face latérale et de la deuxième face latérale de la barrière thermiquement formant ledit angle de la barrière thermiquement isolante. Selon un mode de réalisation, la contre-forme présente une troisième aile se développant dans un plan perpendiculaire à la direction d'épaisseur de la cuve, ladite troisième aile étant liée de manière étanche à la membrane d'étanchéité.

Selon un mode de réalisation, la contre-forme est fabriquée par moulage in situ sur l'angle de la barrière thermiquement isolante.

Selon un mode de réalisation, le procédé comporte une étape de positionner un dispositif de raccordement comportant une cornière de raccordement et une bride de raccordement disposée en regard d'un orifice ménagé dans ladite cornière de raccordement, ladite cornière de raccordement étant liée de manière étanche à la surface de support, à la membrane d'étanchéité et à la couverture étanche et la bride de raccordement étant raccordée de manière étanche à un moyen de mise en dépression de l'espace clos.

Selon un mode de réalisation, la cornière de raccordement est fabriquée par moulage in situ sur la barrière thermiquement isolante, la bride de raccordement étant prise dans la masse de la cornière de raccordement lors de son moulage.

Selon un mode de réalisation, l'invention fournit également un dispositif d'étanchéité pour fermer un espace clos défini entre une membrane d'étanchéité fixée sur une barrière thermiquement isolante ancrée à une surface de support et ladite surface de support; le dispositif d'étanchéité comportant
- une couverture étanche liée de manière étanche à, d'une part, la membrane d'étanchéité au moyen d'une première bande de mastic étanche et, d'autre part, à la surface de support au moyen d'une deuxième bande de mastic étanche, et
- une pompe à vide reliée à l'espace clos et apte à mettre en dépression ledit espace clos.

Un tel dispositif d'étanchéité permet de tester de façon simple, rapide et fiable l'étanchéité d'une portion de cuve.

Selon des modes de réalisation, un tel dispositif d'étanchéité peut comporter une ou plusieurs des caractéristiques précitées ou des caractéristiques suivantes.

Selon l'invention, la couverture étanche comporte une bâche de film polymère, le dispositif d'étanchéité comportant en outre un écran couvrant un interstice entre la barrière thermiquement isolante et la surface de support de manière à obstruer ledit interstice et empêcher l'insertion de la bâche de film polymère dans ledit interstice en présence d'une dépression dans l'espace clos.

Selon un mode de réalisation, le dispositif d'étanchéité comporte en outre un dispositif de bridage agencé pour exercer une force d'appui en direction de la surface de support sur la couverture étanche au droit des première et deuxième bandes de mastic étanches.

L'application d'une telle force d'appui sur la couverture étanche au droit des bandes de mastic étanche assure une bonne coopération et une bonne étanchéité de la fixation de la couverture étanche sur les bandes de mastic étanche.

Selon un mode de réalisation, le dispositif de bridage comporte un organe de fixation fixé sur la surface de support et une plaque d'appui, la plaque d'appui étant montée de façon mobile selon une direction d'épaisseur de la cuve sur l'organe de fixation de manière à pouvoir être amenée en appui sur la couverture étanche au droit de la deuxième bande de mastic étanche.

Selon un mode de réalisation, les blocs préfabriqués comportent une portion de barrière thermiquement isolante primaire reposant sur le film étanche rigide. Selon un mode de réalisation, lesdites portions de barrière thermiquement isolante présentent des dimensions inférieures aux dimensions du film étanche rigide de sorte qu'une périphérie dudit film étanche rigide soit apparente.

Selon un mode de réalisation, le dispositif de bridage comporte un organe d'appui fixé sur la portion de barrière thermiquement isolante primaire d'un bloc préfabriqué.

Selon un mode de réalisation, la membrane d'étanchéité est une membrane d'étanchéité ondulée comportant une première série d'ondulation parallèles et une deuxième série d'ondulations parallèles, les ondulations de la première série d'ondulations parallèles et les ondulations de la deuxième série d'ondulations parallèles étant sécantes, la membrane d'étanchéité comportant une pluralité de nœuds formés au niveau des intersections entre les ondulations de la première série d'ondulations parallèles et les ondulations de la deuxième série d'ondulations parallèles. Selon un mode de réalisation, le dispositif de bridage comporte un organe d'appui fixé sur la membrane d'étanchéité, par exemple par clipsage sur des contre-dépouilles formées par les nœuds de la membrane d'étanchéité.

Selon un mode de réalisation ledit organe d'appui présente une base fixée sur ladite portion de barrière thermiquement isolante primaire, par exemple sur un desdits noeuds de la membrane d'étanchéité, une entretoise se développant depuis ladite base en direction du film étanche rigide et une plaque d'appui montée mobile selon la direction d'épaisseur de la cuve sur l'entretoise de manière à être apte à exercer une force d'appui sur la couverture étanche au droit de la première bande de mastic étanche.

Selon un mode de réalisation, la surface de support est formée par une structure porteuse destinée à recevoir une cuve étanche et thermiquement isolante comportant la membrane d'étanchéité dont on souhaite tester l'étanchéité, par exemple par la coque interne d'un navire comportant ladite cuve.

Selon un mode de réalisation, la surface de support est formée par la membrane d'étanchéité secondaire d'une cuve étanche et thermiquement isolante, la membrane d'étanchéité à tester étant alors une membrane d'étanchéité primaire.

Un tel procédé de test d'étanchéité ou un tel dispositif d'étanchéité peuvent être mis en œuvre dans une cuve pouvant faire partie d'une installation de stockage terrestre, par exemple pour stocker du GNL ou installée dans une structure flottante, côtière ou en eau profonde, notamment un navire méthanier, une unité flottante de stockage et de regazéification (FSRU), une unité flottante de production et de stockage déporté (FPSO) et autres. Une telle cuve peut aussi servir de réservoir de carburant dans tout type de navire.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] la figure 1 est une vue en perspective schématique d'une portion de cuve étanche et thermiquement isolante.
[fig.2] la figure 2 est une vue en coupe de la portion de cuve étanche et thermiquement isolante de la figure 1 sur laquelle est installé un dispositif d'étanchéité selon un premier mode de réalisation.
[fig.3] la figure 3 est une vue en coupe de la portion de cuve étanche et thermiquement isolante de la figure 1 sur laquelle est installé un dispositif d'étanchéité selon une première variante du premier mode de réalisation illustré sur la figure 2.
[fig.4] la figure 4 est une vue en coupe de la portion de cuve étanche et thermiquement isolante de la figure 1 sur laquelle est installé un dispositif d'étanchéité selon une deuxième variante du premier mode de réalisation illustré sur la figure 2.
[fig.5] la figure 5 est une vue en perspective schématique d'une portion de cuve étanche et thermiquement isolante dont l'étanchéité de la membrane d'étanchéité doit être testée.
[fig.6] la figure 6 est une vue en perspective schématique de détail de la portion de cuve illustrée sur la figure 5 lors d'une première étape de mise en œuvre d'un procédé de test d'étanchéité au moyen d'un dispositif d'étanchéité selon un deuxième mode de réalisation non couvert par les revendications.
[fig.7] la figure 7 est une vue en perspective schématique de détail de la portion de cuve illustrée sur la figure 5 lors d'une deuxième étape de mise en œuvre du procédé de test d'étanchéité au moyen du dispositif d'étanchéité selon le deuxième mode de réalisation.
[fig.8] la figure 8 est une vue en perspective schématique de détail de la portion de cuve illustrée sur la figure 5 lors d'une troisième étape de mise en œuvre du procédé de test d'étanchéité au moyen du dispositif d'étanchéité selon le deuxième mode de réalisation.
[fig.9] la figure 9 est une vue en perspective schématique de détail de la portion de cuve illustrée sur la figure 5 lors d'une quatrième étape de mise en œuvre du procédé de test d'étanchéité au moyen du dispositif d'étanchéité selon le deuxième mode de réalisation.
[fig.10] la figure 10 est une vue en perspective schématique de détail de la portion de cuve illustrée sur la figure 5 lors d'une cinquième étape de mise en œuvre du procédé de test d'étanchéité au moyen du dispositif d'étanchéité selon le deuxième mode de réalisation.
[fig.11] la figure 11 est une vue en perspective schématique de détail de la portion de cuve illustrée sur la figure 5 sur laquelle est installé le dispositif d'étanchéité selon le deuxième mode de réalisation.
[fig.12] la figure 12 est une vue en coupe de la portion de cuve étanche et thermiquement isolante de la figure 1 sur laquelle est installé un dispositif d'étanchéité selon une autre variante du premier mode de réalisation illustré sur la figure 2.
[fig.13] la figure 13 est une vue en perspective d'un dispositif de raccordement lors de sa fabrication par moulage in-situ sur la barrière thermiquement isolante secondaire.

### Description des modes de réalisation

Dans la suite de la description, on utilisera les termes « externe » et « interne » pour désigner, selon les définitions données dans la description, la position relative d'un élément par rapport à un autre, par référence à l'intérieur de la cuve. Ainsi, un élément proche de ou tourné vers l'intérieur de la cuve est qualifié d'interne par opposition à un élément externe situé proche de ou tourné vers l'extérieur de la cuve.

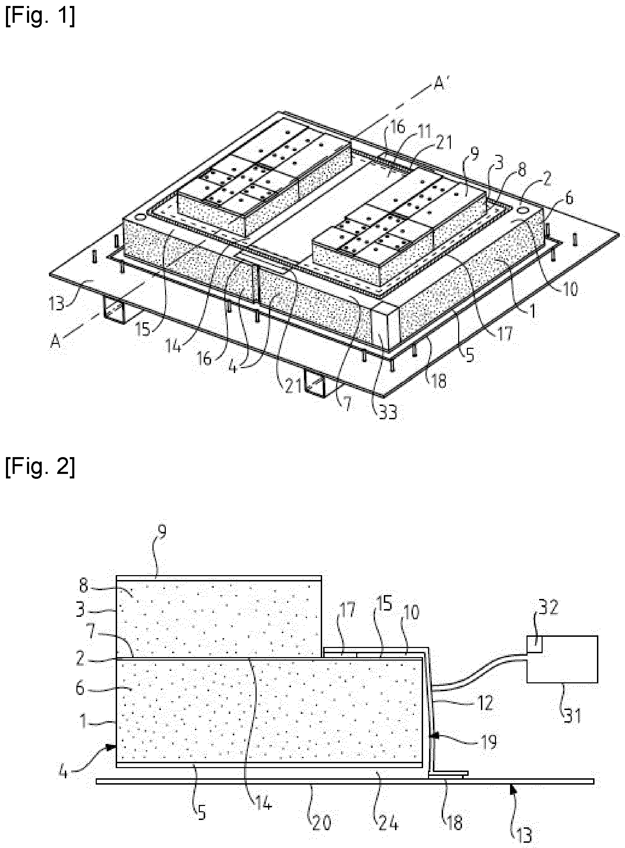

En relation avec la figure 1, on observe une portion de cuve étanche et thermiquement isolante ancrée sur une structure porteuse 13. Une telle portion de cuve comporte, de l'extérieur de la cuve vers l'intérieur de la cuve, une barrière thermiquement isolante secondaire 1, une membrane d'étanchéité secondaire 2, une barrière thermiquement isolante primaire 3 et une membrane d'étanchéité primaire (non illustrée sur la figure 1).

La cuve est fabriquée à partir de blocs préfabriqués 4 comportant chacun une portion de barrière thermiquement isolante secondaire, une portion de membrane d'étanchéité secondaire et une portion de barrière thermiquement isolante primaire. Plus particulièrement, chaque bloc préfabriqué 4 comporte, de l'extérieur de la cuve vers l'intérieur de la cuve, une plaque de fond 5, une garniture isolante secondaire 6, un film étanche rigide 7, une garniture isolante primaire 8 et une plaque de couvercle 9. La plaque de fond 5 et la garniture isolante secondaire 6 forment un premier bloc de forme sensiblement parallélépipédique recouvert par le film étanche rigide 7 et la garniture isolante primaire 8 et la plaque de couvercle 9 forment un deuxième bloc de forme sensiblement parallélépipédique reposant sur le film étanche rigide 7.

La plaque de fond 5 et la plaque de couvercle 9 sont par exemple fabriquées en bois contreplaqué. La garniture isolante secondaire 6 et la garniture isolante primaire 8 sont par exemple fabriquées en mousse de polyuréthane, éventuellement renforcée de fibres. Le film étanche rigide 7 est par exemple en triplex^{®} rigide, c'est-à-dire constitué d'une feuille d'aluminium intercalée entre deux couches de fibres de verre et de résine.

Dans un tel bloc préfabriqué 4, la plaque de fond 5, la garniture isolante secondaire 6 et le film étanche rigide 7 présentent des dimensions dans un plan perpendiculaire à la direction d'épaisseur de la cuve supérieures aux dimensions de la garniture isolante primaire 8 et de la plaque de couvercle 9 de sorte qu'une bordure périphérique 10 du film étanche rigide n'est pas recouverte par la garniture isolante primaire 8.

Lors de la fabrication de la cuve, de tels blocs préfabriqués 4 sont ancrés sur la structure porteuse 13, par exemple la paroi interne d'une double coque de navire, de façon juxtaposée. Un film étanche souple 11 est appliquée sur la bordure périphérique 10 du film étanche rigide 7 de deux blocs préfabriqués 4 juxtaposés de manière à assurer une continuité de l'étanchéité entre les films étanches rigide 7 de deux blocs préfabriqués 4 adjacents. Ce film étanche souple 11 est par exemple réalisée en triplex^{®} souple, c'est-à-dire comportant une feuille d'aluminium entre deux couches de fibres de verre non résinées. La membrane d'étanchéité secondaire 2 est formée par le film étanche rigide 7 de ces deux blocs préfabriqués 4 et une portion de film étanche souple 11 reliant les portions de bordures périphériques 10 adjacentes desdits deux blocs préfabriqués 4. D'autres détails sur de tels blocs préfabriqués 4, leur agencement, ou encore d'autres éléments constitutifs de la cuve sont par exemple décrits dans le document FR2903165.

Lors de la fabrication des cuves, il est nécessaire de tester l'étanchéité de la membrane d'étanchéité secondaire 2 en cours de fabrication.

C'est par exemple le cas dans les cuves de petite taille telles que les cuves destinées à servir de réservoir de carburant alimentant un système de propulsion. En effet, ces cuves sont susceptibles d'être montées en deux temps, une partie inférieure de la cuve étant montée sur la structure porteuse 13 dans un premier temps puis, dans un second temps et après installation d'échafaudages, la partie supérieure de la cuve est montée sur la structure porteuse 13. Il est nécessaire de tester la bonne étanchéité de la membrane d'étanchéité 2 secondaire préalablement à l'installation de la partie supérieure de la cuve. Or, lorsque seule la partie inférieure de la cuve est montée, la membrane d'étanchéité secondaire 2 n'est que partiellement formée et la bordure périphérique 10 est apparente sur les blocs préfabriqués qui constituent les extrémités de ladite partie inférieure de la cuve.

C'est également le cas lors de la fermeture de la cuve dans le cadre d'une cuve de méthanier. En effet, lors de la fabrication d'une cuve de méthanier, une portion latérale de la structure porteuse 13, et donc de la cuve correspondante, est laissée ouverte afin de permettre le passage des outillages nécessaires à la construction de la cuve. Cette ouverture, généralement appelée brèche de bordée, est fermée pour finaliser la construction de la cuve en rapportant une portion de structure porteuse 13 sur laquelle est montée une portion correspondante de la cuve. La portion de la cuve montée sur la portion rapportée de la structure porteuse 13 comporte des blocs préfabriqués 4 et présente une bordure périphérique 10 de membrane d'étanchéité secondaire 2 apparente. L'étanchéité de la membrane d'étanchéité secondaire 2 formée par cette portion de cuve rapportée doit également être testée préalablement à la finalisation de la fabrication de la cuve.

Afin de tester l'étanchéité de la membrane d'étanchéité secondaire 2 dans une cuve en cours de fabrication, il est prévu un dispositif de test d'étanchéité. Les figures 2 à 4 illustrent un premier mode de réalisation d'un tel dispositif de test d'étanchéité.

Dans l'exemple illustré sur la figure 1, seuls deux blocs préfabriqués 4 sont illustrés. La suite de la description de ce premier mode de réalisation du dispositif de test d'étanchéité est réalisée dans le cadre d'une portion de cuve formée par ces deux blocs préfabriqués 4 et la portion de film étanche souple 11 reliant lesdits blocs préfabriqués 4. Cependant, cette description s'applique par analogie à tout ensemble de blocs préfabriqués 4 ancrés sur la structure porteuse et reliés au niveau de leurs bords adjacents par des portions de film étanche souple 11.

Une telle portion de cuve présente une portion centrale 14 de membrane d'étanchéité secondaire 2 dont l'étanchéité doit être testée. Cette portion centrale 14 est formée par les films étanche rigides 7 des blocs préfabriqués adjacents 4 et les portions de film étanche souple 11 reliant lesdits blocs préfabriqués 4. Cette portion centrale 14 est entourée par une portion périphérique 15 de membrane d'étanchéité secondaire 2. Cette portion périphérique 15 est formée d'une part par les portions de bordure périphérique 10 situées au niveau de face de blocs préfabriqués 4 sans bloc préfabriqué 4 en vis-à-vis et, d'autre part, par des portions d'extrémité 16 des portions de film étanche souple 11 reliant lesdites portions de bordure périphérique 10.

La figure 2 illustre une vue en coupe d'une portion de cuve en cours de fabrication sur laquelle est installé un dispositif de test d'étanchéité de la membrane d'étanchéité secondaire selon le premier mode de réalisation. Typiquement, cette figure 2 illustre une vue en coupe des blocs préfabriqués 4 au niveau du plan de coupe A-A de la figure 1. Ce dispositif de test d'étanchéité a pour fonction de permettre de tester l'étanchéité de la portion centrale 14 de la membrane d'étanchéité secondaire 2 formée par les deux blocs préfabriqués 4 ainsi que par la portion de film étanche souple 11 reliant de manière étanche les portions en vis-à-vis des bordures périphériques 10 des deux blocs préfabriqués 4.

Selon ce premier mode de réalisation, le dispositif de test d'étanchéité comporte une bâche en film polymère 12 fixée de manière étanche sur d'une part la membrane d'étanchéité secondaire 2 et, d'autre part sur la structure porteuse 13 au moyen de bandes de mastic étanche.

Une première bande de mastic étanche 17 adhésive est appliquée sur le film étanche rigide 7. Plus particulièrement, cette première bande de mastic étanche 17 adhésive est appliquée de façon étanche sur la portion périphérique 15 de la membrane d'étanchéité 2, c'est-à-dire sur toute la périphérie de la membrane d'étanchéité secondaire 2 entourant entièrement la portion centrale 14 de la membrane d'étanchéité secondaire 2 à tester.

Une deuxième bande de mastic étanche 18 adhésive est appliquée directement sur la structure porteuse 13. Plus particulièrement, cette deuxième bande de mastic étanche 18 adhésive est appliquée de façon étanche sur la structure porteuse 13 de manière à entourer entièrement la portion de cuve dont l'étanchéité de la membrane d'étanchéité secondaire 2 doit être testée.

La bâche de film polymère 12 est appliquée de manière étanche sur la première bande de mastic étanche 17 adhésive. De même, la bâche de film polymère 12 est appliquée de manière étanche sur la deuxième bande de mastic étanche 18 adhésive. Typiquement, la bâche de film polymère 12 relie de manière étanche la membrane d'étanchéité secondaire 2 recouverte par la première bande de mastic étanche 17 et la structure porteuse 13 au niveau de la deuxième bande de mastic étanche 18. Ainsi, un espace clos 19 est délimité conjointement par la portion 20 de structure porteuse 13 entourée par la deuxième bande de mastic étanche 18, la bâche de film polymère 12 et la portion centrale 14 de la membrane d'étanchéité secondaire 2 entourée par la première bande de mastic étanche 17.

La première bande de mastic étanche 17 et la deuxième bande de mastic étanche 18 sont de préférence en caoutchouc synthétique. Par exemple, les bandes de mastic étanche 17, 18 sont présentées sous la forme de rubans de mastic étanche adhésive présentant une épaisseur de caoutchouc synthétique adhésif comprise entre 1 et 4 mm, par exemple 3mm, portée par un film en PTFE polyester ou autre, le ruban étant déroulé en appliquant la face portant la mastic étanche sur la surface d'application et en retirant le film une fois la mastic étanche appliquée sur ladite surface. De tels rubans de mastic étanche 17, 18 à base d'adhésif en caoutchouc synthétique sont par exemple produites par la société Airtech^{®}, par exemple sous l'appellation AT-200Y. Le mastic est par exemple un mastic butyl, c'est-à-dire un mastic plastique à base de polyisobutène. Un tel mastic présente une viscosité au repos et à 25°C comprise entre 735 000 et 805 000 Pa.s, par exemple de l'ordre de 770 000 Pa.s. et une viscosité à 25°C comprise entre 180 000 et 250 000 Pa.s, par exemple de l'ordre de 215 000 Pa.s lorsqu'il est sollicité à une vitesse de cisaillement de 0.6 s⁻¹. Par ailleurs, un tel mastic présente une contrainte à la rupture en cisaillement, déterminée à -170 °C selon la norme ISO4587, comprise entre 17 et 30 MPa et de préférence supérieure à 22 MPa. Enfin, il a été observé qu'un tel mastic avait d'excellentes propriétés d'adhérence.

La bâche de film polymère 12 est par exemple en film vinyle ou en Nylon, telle que par exemple une bâche produite par la société Airtech^{®} sous l'appellation Wrightlon^{®}. Une telle bâche en nylon présente par exemple une épaisseur comprise entre 50 et 100 µm, par exemple de l'ordre de 70 µm. Selon un autre mode de réalisation, la bâche de film polymère 12 est réalisée en polyéthylène et présente préférentiellement une épaisseur comprise entre 150 et 240 µm, par exemple de l'ordre de 190 µm. Une telle bâche en film polymère 12 est étanche et peut être fixée de manière étanche de façon fiable et simple au moyen d'une bande de mastic étanche 17, 18 adhésive telle que décrite ci-dessus. En outre, une telle bâche de film polymère 12 peut aisément être dimensionnée en fonction des dimensions de la portion de cuve dont l'étanchéité de la membrane d'étanchéité secondaire 2 doit être testée.

Pour vérifier l'étanchéité de la fixation de la première bande de mastic étanche 17 sur la membrane d'étanchéité secondaire 2, de la deuxième bande de mastic étanche 18 sur la structure porteuse 13 et de la bâche de film polymère 12 sur lesdites bandes de mastic étanche 17, 18 adhésives, il est par exemple possible d'utiliser un système acoustique de détection de fuite, tel que par exemple un système de détection de fuite à ultrason, après avoir préalablement mise en dépression l'espace clos 19. Un tel système de détection de fuite par ultrason est par exemple de type Vacleak LEQ-70^{®} qui est produit par la société Airtech^{®}.

Afin de tester l'étanchéité de la membrane d'étanchéité secondaire 2 à tester, c'est-à-dire la portion centrale 14 entourée par la première bande de mastic étanche 17, la bâche de film polymère 12 est reliée à un moyen de dépression. Un tel moyen de dépression est par exemple une pompe à vide 31 raccordée à l'espace clos 19 ou tout autre moyen de dépression apte diminuer la pression dans l'espace clos 19.

L'activation du moyen de dépression permet de faire diminuer la pression dans l'espace clos 19 par rapport à l'environnement extérieur audit espace clos 19. Cette dépression est par exemple de l'ordre de -500 à -600 mbars.

Afin de détecter un éventuel défaut de l'étanchéité de la membrane d'étanchéité secondaire 2, l'évolution d'un paramètre représentatif de la pression dans l'espace clos 19 est alors contrôlée au moyen d'un capteur ad hoc, par exemple un capteur intégré à la pompe à vide 31. Ce paramètre peut être par exemple la pression mesurée dans l'espace clos par un capteur de pression 32, un paramètre de tension de la bâche de film polymère 12 sous l'effet de la dépression dans l'espace clos 19, un paramètre acoustique ou tout autre paramètre permettant de mesurer l'évolution de la pression dans l'espace clos 19. En cas d'élévation de la pression dans l'espace clos 19 par rapport à l'environnement extérieur audit espace clos 19, alors un défaut de l'étanchéité de la membrane d'étanchéité secondaire 2 testée est détecté.

La portion de film étanche souple 11 présente une rugosité supérieure à la portion de film étanche rigide 7. En effet, la portion de film étanche souple 11 de type Triplex^{®} souple présente des fibres apparentes qui nuisent à l'adhésion étanche de la première bande de mastic étanche 17 adhésive sur ladite portion de film étanche souple 11

Afin de s'assurer de la coopération étanche entre la portion de film étanche souple 11 et la première bande de mastic étanche 17, une couche de colle de polyuréthane 21 est appliquée sur les portions d'extrémité 16 de la portion de film étanche souple 11 destinées à recevoir la première bande de mastic étanche 17. Cette couche de colle de polyuréthane 21 pénètre la portion de film étanche souple 11 assurant ainsi une bonne coopération entre ladite couche de colle de polyuréthane 21 et la portion de film étanche souple 11. Cette couche de colle de polyuréthane 21 offre en outre une bonne surface d'adhésion pour la première bande de mastic étanche 17, assurant ainsi la fixation étanche et fiable de ladite première bande de mastic étanche 17 sur la portion de film étanche souple 11. Afin d'assurer une bonne imprégnation de la couche de polyuréthane 21 dans le film étanche souple 11, la couche de colle polyuréthane 21 est avantageusement chauffée et pressée. Après le test d'étanchéité, la couche de colle polyuréthane 21 est de préférence poncée afin d'éviter la présence de résidus de colle de polyuréthane sur la portion de film étanche souple 11. De même, après le test d'étanchéité il est de préférence procédé à une vérification, par exemple un simple contrôle visuel de la part d'un opérateur, de l'absence de résidus de la première bande de mastic étanche 17, et éventuellement de la deuxième bande de mastic étanche 18.

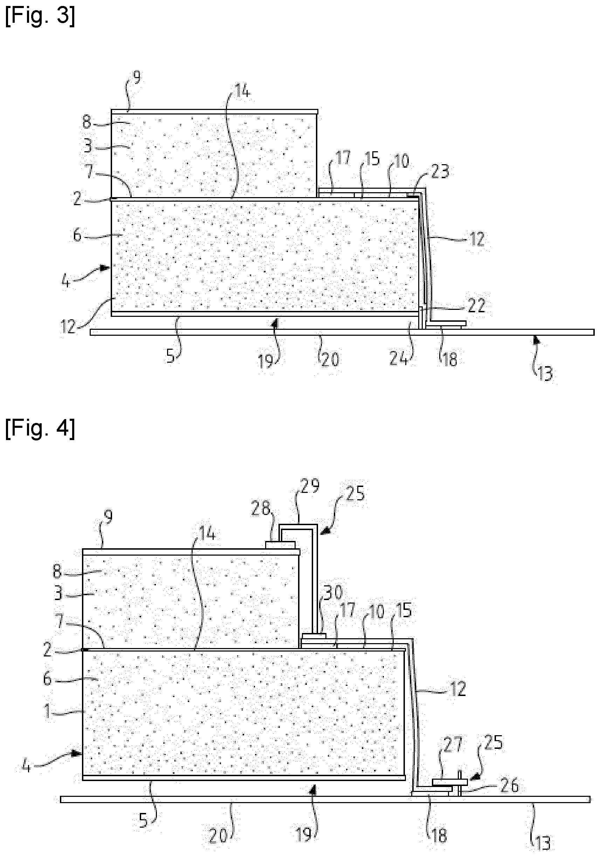

La figure 3 illustre une première variante du premier mode de réalisation du dispositif de test d'étanchéité. Cette première variante diffère de celle décrite en regard de la figure 2 en ce que le dispositif de test d'étanchéité comporte en outre une cornière 22 formant écran et un tissu de renforcement 23.

Lors de la mise en dépression de l'espace clos 19, la bâche de film polymère 12 est amenée sous l'effet de la dépression en contact et en appui contre la barrière thermiquement isolante secondaire 1. En particulier, la bâche de film polymère 12 est amenée au contact de l'angle saillant formé par la barrière thermiquement isolante secondaire 1. Une bâche de film polymère 12 relativement fine pourrait ainsi se dégrader au contact de l'angle saillant formé par la barrière thermiquement isolante secondaire 1.

Dans cette première variante, le tissu de renforcement 23 est positionné de manière à recouvrir l'angle saillant formé par la barrière thermiquement isolante secondaire 1 et ainsi protéger la bâche de film polymère 12 lors de la mise en dépression de l'espace clos 19.

De même, la garniture isolante 6 de la barrière thermiquement isolante secondaire 1 peut présenter une rugosité élevée, en particulier lorsque cette garniture isolante 6 est formée de mousse renforcée par des fibres. Cette rugosité de la garniture isolante 6 peut également dégrader la bâche de film polymère 12 lors de la mise en dépression de l'espace clos 19, ladite mise en dépression de l'espace clos amenant la bâche de film polymère au contact de la garniture isolante secondaire 6. Ainsi, le tissu de renforcement 23 recouvre avantageusement les faces latérales des blocs préfabriqués 4 de manière à protéger la bâche de film polymère 12 lors de la mise en dépression de l'espace clos 19.

Un tel tissu de renforcement 23 est installé, par exemple en étant fixé ou déposé sur la barrière thermiquement isolante secondaire 1 aux endroits susceptibles de dégrader la bâche de film polymère 12. Ce tissu de renforcement peut également être directement intégré à la bâche de film polymère 12, par exemple par collage, et la bâche de film polymère est alors fixée pour former l'espace clos de manière à ce que ce tissu de renforcement 23 soit agencé aux endroits voulus de la barrière thermiquement isolante secondaire 1 lors de la mise en dépression de l'espace clos 19. Un tel tissu de renforcement 23 peut être réalisé dans de nombreux matériaux tels qu'en carton, en bois, en plastique ou autre permettant de protéger la bâche de film polymère 12.

Par ailleurs, lorsque les blocs préfabriqués 4 sont ancrés sur la structure porteuse 13, un interstice 24 demeure présent entre la plaque de fond 5 desdits blocs préfabriqués 4 et la structure porteuse 13. Cet interstice résulte de la présence de cordons de mastics entre la plaque de fond 5 des blocs préfabriqués 4 et la structure porteuse 13. De tels cordons de mastics permettent de rattraper les défauts de planéité de la structure porteuse 13 et offrent une surface d'appui plane pour l'ancrage des blocs préfabriqués 4.

La cornière 22 est installée autour de la portion de cuve dont l'étanchéité de la membrane d'étanchéité secondaire 2 doit être testée. La cornière 22 est positionnée le long de la barrière thermiquement isolante secondaire 1 de manière à obstruer l'interstice séparant les blocs préfabriqués 4 et la structure porteuse 13. Typiquement, cette cornière 22 présente une plaque plane se développant depuis la structure porteuse 13 vers l'intérieur de la cuve au moins jusqu'à la plaque de fond 5 des blocs préfabriqués 4. Cette plaque plane offre ainsi une surface d'appui continue et plane autour de la portion de cuve dont l'étanchéité de la membrane d'étanchéité secondaire 2 doit être testée. Lors de la mise en dépression de l'espace clos 19, la bâche de film polymère 12 est amenée sous l'effet de la dépression dans l'espace clos 19 en appui contre cette surface plane formée par la cornière 22 et ne peut s'insérer dans les interstices séparant les blocs préfabriqués 4 et la structure porteuse 13, une telle insertion pouvant dégrader la bâche de film polymère 12.

De façon analogue et non représentée, un moyen d'obturation peut être prévu entre deux face latérale de blocs préfabriqués 4 adjacents pour éviter une dégradation de la bâche de film polymère 12 sous l'effet de la dépression dans l'espace clos 19. Ce moyen d'obturation est par exemple réalisé en recouvrant les espaces entre les blocs préfabriqués 4 adjacents avec le tissu de renforcement 23, une plaque plane ou tout autre moyen adapté. Ainsi, ce moyen d'obturation peut également être réalisé à l'aide de bouchons de garniture isolante insérée entre les blocs préfabriqués.

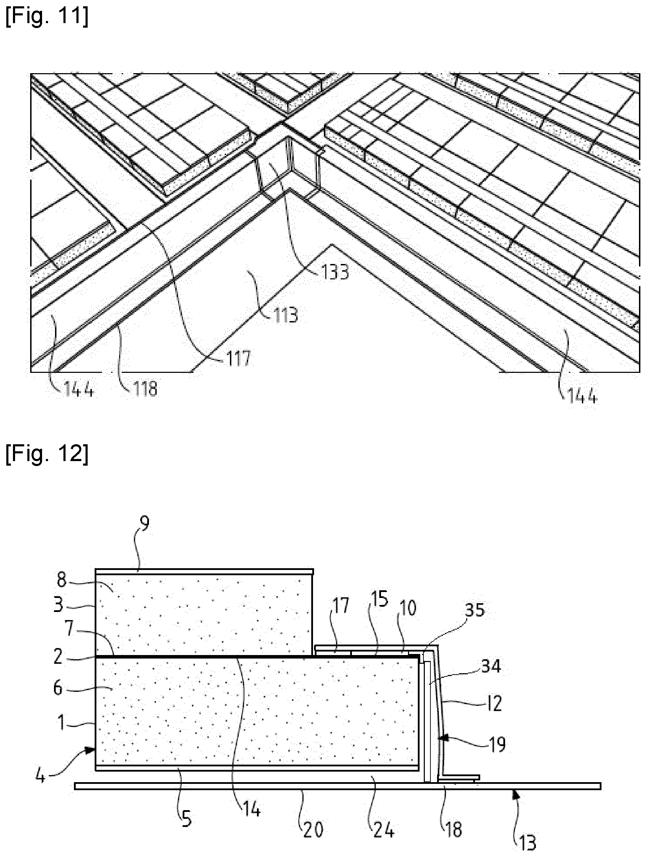

Dans une autre variante de réalisation représentée sur la figure 12, le dispositif d'étanchéité comporte une plaque 34, par exemple en matière plastique, tel que du PVC, qui permet de protéger la bâche de film polymère 12, lors de la mise en dépression, en évitant que celle-ci ne vienne en contact contre la garniture isolante 6 et ne s'insère dans les interstices séparant les blocs préfabriqués 4 et la structure porteuse 13.

Par ailleurs, dans ce mode de réalisation, le dispositif d'étanchéité comporte une cornière de protection 35 qui est positionné le long de la barrière thermiquement isolante secondaire 1. La cornière de protection 35 comporte une première aile plane qui s'étend parallèlement à la structure porteuse 13 et est fixée contre le film étanche rigide 7 et une deuxième aile plane qui s'étend selon la direction d'épaisseur de la paroi de cuve, en direction de la structure porteuse 13 et est positionnée contre les faces latérales des blocs préfabriqués 4. La cornière protection 4 est, par exemple, en carton et permet de protéger la bâche de film polymère 12 des angles saillants de la barrière thermiquement isolante secondaire 1.

De manière avantageuse, la plaque 34 s'étend dans la direction d'épaisseur de la paroi de cuve, en direction de l'intérieur de la cuve, au-delà du bord de la deuxième aile plane de la cornière de protection 35, ce qui permet d'éviter que la bâche de film polymère 12 ne vienne en contact contre la garniture isolante 6.

La figure 4 illustre une deuxième variante du premier mode de réalisation du dispositif de test d'étanchéité. Cette deuxième variante diffère de celle décrite en regard de la figure 2 en ce que le dispositif de test d'étanchéité comporte en outre un dispositif de bridage 25 complémentaire pour assurer la fixation étanche de la bâche de film polymère 12 sur la structure porteuse 13 et sur la membrane d'étanchéité secondaire 2.

Un tel dispositif de bridage 25 comporte des goujons 26 fixés sur la structure porteuse 13. Des plaques d'appui 27 sont montées sur ces goujons 26 par tout moyen adapté. Par exemple, un tel goujon 26 comporte une tige dont l'extrémité est filetée. La plaque d'appui 27 présente un orifice traversant et est montée sur le goujon 26 de sorte que la tige dudit goujon traverse l'orifice traversant de la plaque d'appui 27. Un écrou (non illustré) est vissé sur le l'extrémité filetée de la tige de manière appuyer la plaque d'appui 27 en direction de la structure porteuse 13. Une telle plaque d'appui 27 est par exemple un tasseau en bois et est positionné de manière à être amené en appui contre la bâche de film polymère 12 au droit de la deuxième bande de mastic étanche 18 lors du vissage de l'écrou.

Le dispositif de bridage 25 comporte en outre un organe d'appui comportant une base 28, une entretoise 29 et une plaque d'appui 30. La base 28 est fixée sur la barrière thermiquement isolante primaire 3. Par exemple, la base 28 est fixée sur les points de fixation qui sont habituellement utilisés pour fixer des panneaux de complément utilisés pour compléter la barrière thermiquement isolante primaire 3 lors de la fabrication de la cuve. L'entretoise 29 se développe depuis la base 28 en direction de la membrane d'étanchéité secondaire 2. Une extrémité de l'entretoise 29 opposée à la base 28 porte la plaque d'appui 30 qui est agencée au droit de la première bande de mastic étanche 17 et appui sur la bâche de film polymère 12 au droit de la première bande de mastic étanche 17. L'appui de ladite plaque d'appui 30 est réglable par tout moyen adapté, par exemple l'entretoise 29 peut être télescopique avec un système de blocage permettant de régler la taille de l'entretoise 29 ou encore l'entretoise 29 peut comporter un filetage coopérant avec un écrou qui lorsqu'il est fileté amène la plaque d'appui 30 en appui sur la bâche de film polymère 12 ou autre.

Au niveau des angles de la portion de cuve dont l'étanchéité de la membrane d'étanchéité secondaire 2 doit être testée, par exemple au niveau des angles de la cuve telle que finalisée, la bâche de film polymère 12 peut présenter des plis afin de suivre la géométrie de la portion de cuve au niveau dudit angle.

Selon une alternative, une pluralité de pièces de bâches de film polymère 12 peuvent être assemblées au moyen d'une bande de mastic étanche adhésive d'étanchéité supplémentaire (non illustrée).

Selon une autre alternative, une contre-forme 33 illustrée sur la figure 1 peut être fixée de manière étanche pour couvrir l'angle. Cette contre-forme 33 comporte une première aile plane, une deuxième aile plane et une troisième aile plane. La première aile plane se développe dans un plan parallèle à la direction d'épaisseur de la cuve et recouvre une portion d'extrémité d'une première face latérale de la barrière thermiquement isolante secondaire 1. La deuxième aile plane se développe dans un plan parallèle à la direction d'épaisseur de la cuve et recouvre une portion d'extrémité d'une deuxième face latérale de la barrière thermiquement isolante secondaire 1, la première portion d'extrémité et la deuxième extrémité formant conjointement un angle saillant de la barrière thermiquement isolante secondaire 1. La troisième aile se développe dans un plan perpendiculaire à la direction d'épaisseur de la cuve et recouvre une portion de membrane d'étanchéité secondaire à l'aplomb desdites portions d'extrémité des première et deuxième faces latérales de la barrière thermiquement isolante secondaire 1. Cette contre-forme 33 est par exemple en Inox et est fixée de manière étanche au moyen de bandes de mastic étanche adhésives telles que décrites ci-dessus appliquées entre la troisième aile et la membrane d'étanchéité secondaire 2 et entre les première et deuxième ailes et la structure porteuse 13.

Dans cette alternative, la bâche de film polymère 12 peut recouvrir la contre-forme 33 d'angle ou être fixée de manière étanche sur ladite contre-forme 33 par une ou plusieurs bandes de mastic étanche adhésives supplémentaires analogues à la première et/ou deuxième bande de mastic étanche adhésive.

Selon une autre alternative, non illustrée, la contre-forme 33 est réalisée par moulage in-situ au niveau des angles de la barrière thermiquement isolante ce qui permet d'obtenir une contre-forme 33 sur-mesure. La contre-forme 33 est, par exemple, réalisée par moulage de colle polyuréthane. Pour ce faire, la zone d'angle destinée à recevoir la contre-forme moulée in situ est préalablement recouverte d'une bande adhésive de protection permettant d'éviter que la colle polyuréthane ne vienne en contact direct contre la membrane d'étanchéité secondaire 2 ou la barrière thermiquement isolante secondaire 1. La bande adhésive de protection est de préférence constituée de silicone et d'acrylique pour ce qui est de la partie adhésive tandis que la partie bande (fonction non adhésive mais de support de l'adhésif et de tenue mécanique) est en polyester, avec une épaisseur comprise entre 150 et 200 µm, de préférence entre 155 et 170 µm (Flash tape 5^{®} de la société SOLVAY). Par la suite, un mât de fibres de verre est positionné contre l'angle de la barrière thermiquement isolante avant d'être recouvert de colle polyuréthane. Selon un mode de réalisation avantageux, le dépôt de la colle polyuréthane peut se faire en deux temps. Après polymérisation de la contre-forme 33, la bande adhésive est retirée et la contre-forme 33 est fixée par une ou plusieurs bandes de mastic étanche adhésives supplémentaires analogues à la première et/ou deuxième bande de mastic étanche adhésive, comme dans le mode de réalisation précédent.

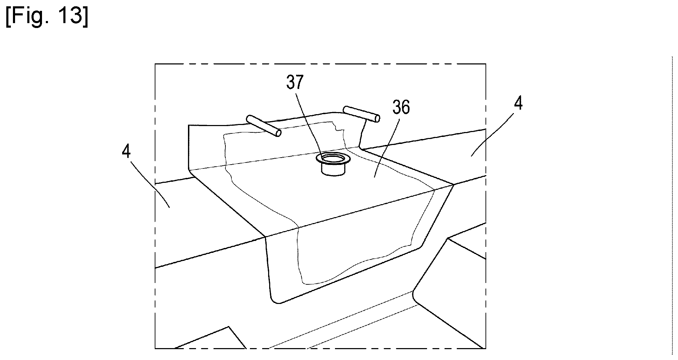

Par ailleurs, selon un mode de réalisation illustré sur la figure 13, la pompe à vide 31 est raccordé à l'espace clos au moyen d'un dispositif de raccordement, tel qu'illustré sur la figure 13. Le dispositif de raccordement comporte une cornière de raccordement 36 qui est avantageusement réalisée par moulage in-situ selon un procédé similaire à celui décrit ci-dessus en relation avec la contre-forme 33. Une bride de raccordement 37 destinée à être raccordée à la pompe à vide 31 est ici prise dans la masse de la cornière de raccordement 36 lors de son moulage. Après polymérisation de la cornière de raccordement 36, la cornière de raccordement 36 est percée en regard de la bride de raccordement 37 afin de permettre la mise en dépression de l'espace clos 19.

Par la suite, la cornière de raccordement 36 est fixée de manière similaire à la contre-forme 33, c'est-à-dire par une ou plusieurs bandes de mastic étanche adhésives supplémentaires analogues à la première et/ou deuxième bande de mastic étanche adhésive.

Comme représenté sur la figure 13, la cornière de raccordement 36 est avantageusement disposée à cheval entre deux blocs préfabriqués 4 adjacents de sorte que la bride de raccordement 37 soit située en regard de l'espace ménagé entre deux blocs préfabriqués 4 adjacents. Ceci facilite la mise en dépression de l'espace clos 19.

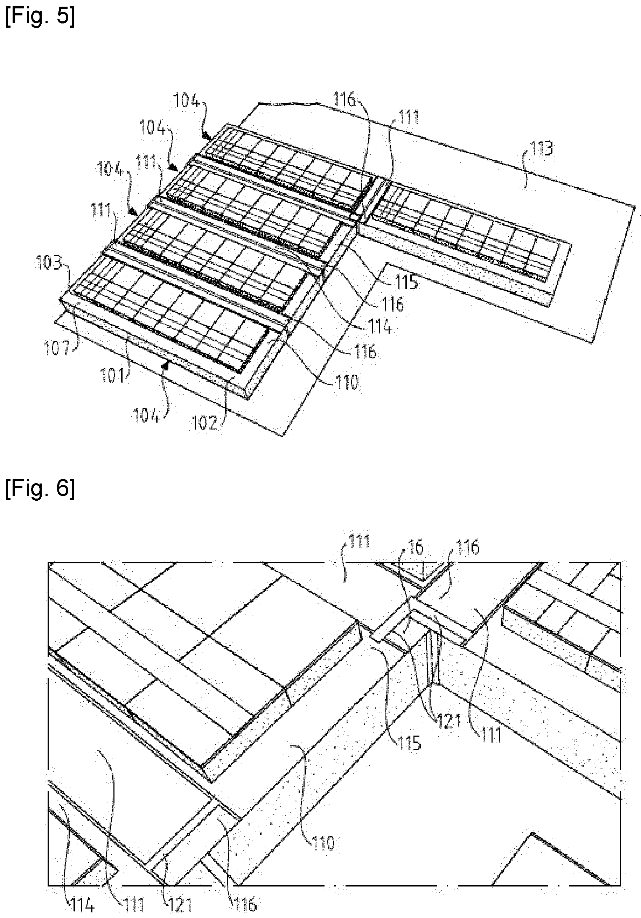

Les figures 5 à 11 illustrent les différentes étapes d'installation d'un dispositif de test d'étanchéité selon un deuxième mode de réalisation. Sur ces figures, les éléments identiques ou remplissant la même fonction que des éléments décrits ci-dessus en regard des figures 1 à 4 présentent la même référence augmentée de 100. Ce deuxième mode de réalisation du dispositif d'étanchéité diffère principalement en ce que la bâche de film polymère 12 est remplacée par des structures métalliques 112 comme expliqué ci-dessous.

La figure 5 représente une pluralité de blocs préfabriqués 104 adjacents dont les films étanche rigides 107 sont reliés entre eux par des portions de film étanche souple 111. De façon analogue au premier mode de réalisation décrit ci-dessus, une première étape de l'installation du dispositif de test d'étanchéité selon le deuxième mode de réalisation consiste à appliquer une couche de colle de polyuréthane 121 sur des portions d'extrémité 116 des portions de film étanche souple 111 destinée à recevoir une première bande de mastic étanche 117, comme illustré sur la figure 6. Ces couches de colle de polyuréthane 121 permettent la bonne coopération entre la première bande de mastic étanche 117 et lesdites portions d'extrémité 116 des portions de filme étanche souple 111.

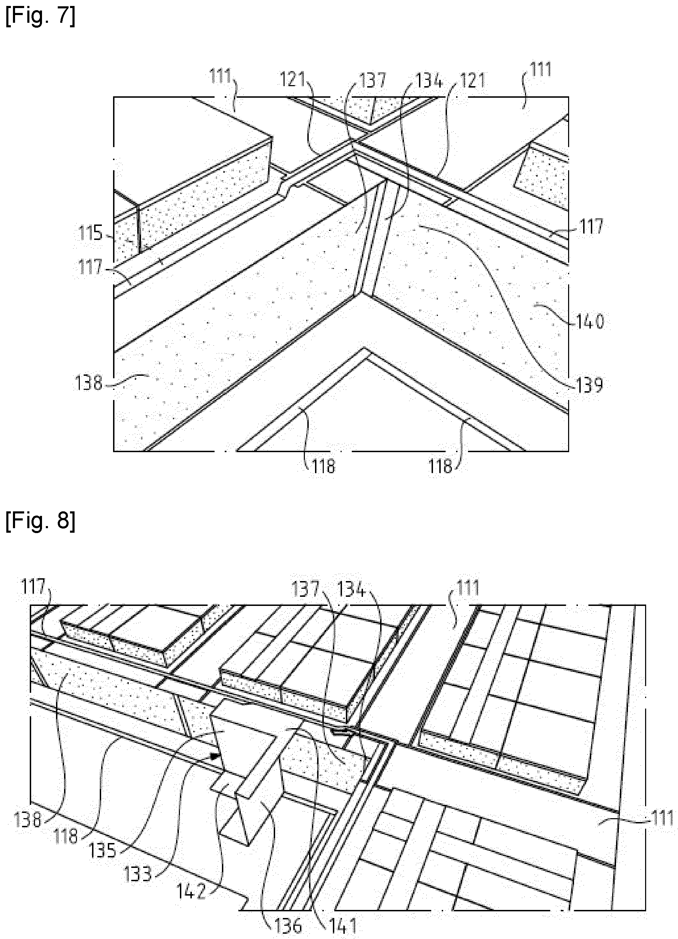

Lors d'une seconde étape de l'installation du dispositif d'étanchéité, comme illustré sur la figure 7, la première bande de mastic étanche 117 est appliquée de manière étanche sur la portion périphérique 115 de la membrane d'étanchéité secondaire 2. De même, la deuxième bande de mastic étanche 118 est appliquée de manière étanche sur la structure porteuse 113 autour de la portion de cuve dont l'étanchéité de la membrane d'étanchéité secondaire 102 doit être testée.

Lors d'une troisième étape, une contre-forme 133 est installée au niveau d'un angle 134 formé par la barrière thermiquement isolante secondaire 101. Cette contre-forme 33 est par exemple en Inox.

La contre-forme 133 comporte une première aile plane 135 et une deuxième aile plane 136. La contre-forme 133 est installée au niveau de l'angle 134 de sorte que la première aile plane 135 se développe dans un plan parallèle à la direction d'épaisseur de la cuve et recouvre une portion d'extrémité 137 d'une première face latérale 138 de la barrière thermiquement isolante secondaire 101. La contre-forme 133 est installée au niveau de l'angle 134 de sorte que la deuxième aile plane 136 se développe dans un plan parallèle à la direction d'épaisseur de la cuve et recouvre une portion d'extrémité 139 d'une deuxième face latérale 140 de la barrière thermiquement isolante secondaire 101, lesdites première portion d'extrémité 137 et deuxième portion d'extrémité 139 formant conjointement l'angle 134 de la barrière thermiquement isolante secondaire 101.

La contre-forme 133 comporte en outre une troisième aile plane 141 et une quatrième aile plane 142. La troisième aile 141 se développe perpendiculaire aux première et deuxième ailes planes 135, 136 depuis des bords internes desdites première et deuxième ailes planes 135, 136. De même, la quatrième aile plane se développe perpendiculaire aux première et deuxième ailes planes 135, 136 depuis des bords externes desdites première et deuxième ailes planes 135, 136. Ainsi, la troisième aile plane 141 et la quatrième aile plane 142 sont parallèles et se développent selon des directions opposées et depuis des bords opposés des première et deuxième aile plane 135, 136. La contre-forme 133 est installée au niveau de l'angle 134 de sorte que la troisième aile 141 soit appliquée de manière étanche sur la première bande de mastic étanche 117 et que la quatrième aile 142 soit appliquée de manière étanche sur la deuxième bande de mastic étanche 118. Ainsi, la contre-forme 133 est fixée de manière étanche au moyen des bandes de mastic étanche 117 et 118 sur la membrane d'étanchéité secondaire 102 et sur la structure porteuse 113.

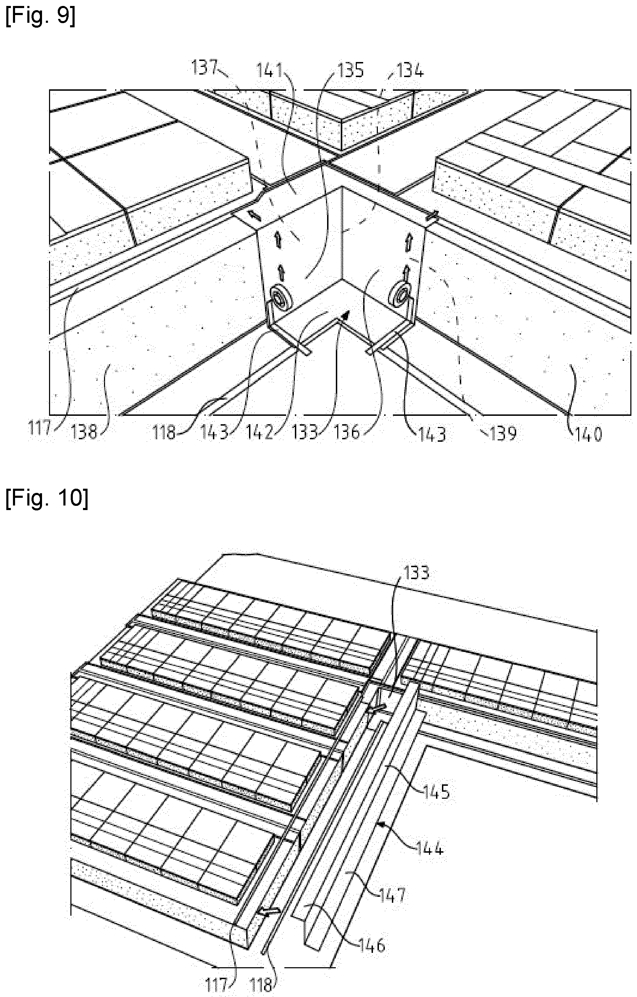

Lors d'une quatrième étape illustrée sur la figure 9, des bandes de mastic étanche complémentaires 143 adhésives sont appliquées sur les bords de la contre-forme 133 qui ne coopèrent pas avec la première bande de mastic étanche 117 ou la deuxième bande de mastic étanche 118.

Lors d'une cinquième étape illustrée sur la figure 10, une structure métallique 144 est agencée de manière étanche entre la membrane d'étanchéité secondaire 102 et la structure porteuse 113. Une telle structure métallique 144 comporte une portion centrale plane 145, un rebord interne 146 plan et un rebord externe 147 plan. Le rebord interne 146 et le rebord externe 147 se développent perpendiculairement à la portion centrale plane 145. Le rebord interne 146 et le rebord externe 147 se développent depuis des bords opposés de la portion centrale plane 145 et selon des directions opposées par rapport à ladite portion centrale plane 145. Cette structure métallique 144 est agencée sur la portion de cuve de sorte que le rebord interne 146 repose de manière étanche sur la première bande de mastic étanche 117 et que le rebord externe 147 repose de manière étanche sur la deuxième bande de mastic étanche 118, la portion centrale plane 145 recouvrant la face latérale 138 de la barrière thermiquement isolante. En outre la structure métallique 144 est agencée sur la portion de cuve de sorte qu'une extrémité de ladite structure métallique coopère de manière étanche avec l'une des bandes de mastic étanche complémentaires 143 agencée sur la contre-forme 133. Typiquement, le rebord interne 146 de la structure métallique 144 coopère de manière étanche avec la bande de mastic étanche complémentaire 143 appliquée sur la troisième aile 141 de la contre-forme 133, la portion centrale plane 145 de la structure métallique 144 coopère de manière étanche avec la bande de mastic étanche complémentaire appliquée sur la première aile 135 de la contre-forme 133 et le rebord externe 147 de la structure métallique 144 coopère de manière étanche avec la bande de mastic étanche complémentaire 143 appliquée sur la quatrième aile 142 de la contre-forme 133. Ainsi, la structure métallique 144 et la contre-forme 133 sont liées de manière étanche par la bande de mastic étanche complémentaire 143.

De telles contre-formes 133 et structures métalliques 144 sont agencées de façon analogue sur toute la périphérie de la portion de cuve dont l'étanchéité de la membrane d'étanchéité secondaire 102 doit être testée afin de former l'espace clos 119 comme illustré sur la figure 11.

Ce deuxième mode de réalisation du dispositif de test d'étanchéité présente une bonne fiabilité, les contre-formes 133 et les structures métalliques 144 présentant une bonne solidité et ne risquant pas de se dégrader. En outre, l'étanchéité de l'espace clos 119 est obtenu simplement et de façon fiable grâce aux bandes de mastic étanche 117, 118 et 143. De plus, ce dispositif de test d'étanchéité est très simple à retirer puisqu'il suffit simplement de retirer les structures 144 et contre-formes 133 puis les bandes de mastic étanche 117 et 118, et éventuellement de poncer les couches de colle de polyuréthane 121.

Afin d'assurer la bonne coopération entre d'une part les structures 144 et les contre-formes 133 et, d'autre part, la première bande de mastic étanche 117 et la deuxième bande de mastic étanche, il est également possible d'appliquer une force sur lesdites structures 144 et contre-formes 133 au moyen d'un dispositif de bridage analogue à celui décrit ci-dessus en regard de la figure 4.

Par ailleurs, afin de rattraper les écarts liés aux tolérances de fabrications de la portion de cuve, il est possible de prévoir des structures 144 et contre-formes 133 en deux parties. Une partie interne d'une structure 144 comporte alors le rebord interne 146 et une partie interne de la portion centrale 145 et une partie externe de la structure 144 comporte le rebord externe 147 et une partie externe de la portion centrale 145. L'étape d'installation de la structure 144 comporte alors une première étape consistant à installer la partie inférieure ou la partie supérieure de la structure, appliquer une bande de mastic étanche complémentaire sur la portion centrale de ladite partie et installer à chevauchement l'autre partie de la structure de sorte que la partie inférieure et la partie supérieure de la portion centrale 145 soient liées de manière étanche par une bande de mastic étanche complémentaire ou par soudage. Cette variante de réalisation permet en jouant sur le chevauchement entre la partie interne et la partie externe de la portion centrale 145 d'adapter la taille de la portion centrale 145 pour rattraper les écarts liés aux tolérances de fabrication de la cuve.

De même, il est possible de rattraper les défauts de planéité de la structure porteuse 13, 113 en appliquant plusieurs couches de mastic étanche pour former la deuxième bande de mastic étanche 18, 118. En particulier, dans le deuxième mode de réalisation du dispositif de test d'étanchéité, les défauts de planéité de la structure porteuse 113 peuvent générer un écart pouvant varier entre 4mm et 30mm avec les structures métalliques 144 ou les contre-formes 133. L'application de plusieurs couches de mastic étanche superposées permet de former la deuxième bande de mastic étanche 118 avec une épaisseur suffisante pour combler ces écarts liés aux défauts de planéité de la structure porteuse 113.

La description ci-dessus est indiquée pour tester l'étanchéité d'une membrane d'étanchéité secondaire 2, 102, mais les dispositifs d'étanchéité ci-dessus peuvent être installés de façon analogue pour tester une étanchéité de membrane d'étanchéité primaire.

Dans le cadre d'un test d'étanchéité d'une membrane d'étanchéité primaire, la membrane d'étanchéité secondaire 2, 102 forme une surface de support plane et étanche sur laquelle est appliquée la deuxième bande de mastic étanche 18, 118. Dans une variante, cette surface de support plane et étanche est formée par un dispositif de test d'étanchéité agencé pour tester l'étanchéité de la membrane d'étanchéité secondaire 2, 102. Dans une autre variante, la deuxième bande de mastic étanche 18, 118 est appliquée sur la structure porteuse 13, 113 et la membrane d'étanchéité secondaire 2, 102 est également logée dans l'espace clos 19, 119. La première bande de mastic étanche 17, 117 est alors appliquée sur la membrane d'étanchéité primaire.

Par ailleurs, un dispositif de bridage 25 peut alors être adapté pour que la base 28 comporte une pince, par exemple de type sauterelle, pouvant être clipsée sur une portion de membrane d'étanchéité primaire dont l'étanchéité doit être testée. Dans le cadre d'une membrane d'étanchéité primaire comportant une première série d'ondulations parallèles et une deuxième série d'ondulations parallèles formant des nœuds au niveau des intersections entre les ondulations de la première série d'ondulations et les ondulations de la deuxième série d'ondulations, la base 28 peut alors être clipsée sur les nœuds de ladite membrane d'étanchéité primaire.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention tel que défini par les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de test d'étanchéité d'une membrane d'étanchéité (2, 102), la membrane d'étanchéité (2, 102) étant fixée sur une barrière thermiquement isolante (1, 101), la barrière thermiquement isolante (1, 101) reposant sur une surface de support étanche (13, 113), le procédé comportant :
- appliquer une première bande de mastic étanche (17, 117) sur la membrane d'étanchéité (2, 102),
- appliquer une deuxième bande de mastic étanche (18, 118) sur la surface de support (13, 113) autour de la membrane d'étanchéité (2,102),
- disposer une couverture étanche (12, 144, 133) sur la première bande de mastic étanche (17, 117) et sur la deuxième bande de mastic étanche (18, 118) de sorte que d'une part la couverture étanche (12, 144, 133) soit liée de manière étanche à la membrane d'étanchéité (2, 102) par la première bande de mastic étanche (17, 117) et que, d'autre part, la couverture étanche (12, 144, 133) soit liée de manière étanche à la surface de support (13, 113) par la deuxième bande de mastic étanche (18, 118), la couverture étanche (12, 144, 133), la surface de support (13, 113), la première bande de mastic étanche (17, 117), la deuxième bande de mastic étanche (18, 118) et la membrane d'étanchéité (2, 102) délimitant conjointement un espace clos (19, 119), la couverture étanche est une bâche de film polymère (12),
- mettre en dépression l'espace clos (19, 119) par rapport à un environnement extérieur audit espace clos (19, 119) ; et
- mesurer un paramètre représentatif de l'évolution de la pression à l'intérieur de l'espace clos (19, 119) après la mise en dépression dudit espace clos (19, 119).

2. Procédé de test d'étanchéité selon la revendications 1,
dans lequel la membrane d'étanchéité (2, 102) comporte au moins une portion de film composite (11, 111) étanche, le procédé comportant en outre une étape d'application d'une couche adhésive (21, 121) sur une face de ladite au moins une portion de film composite (111, 11) de manière à ce que ladite couche adhésive (21, 121) s'imprègne dans la portion de film composite (11, 111), la première bande de mastic étanche (17, 117) étant appliquée sur ladite face de ladite au moins une portion de film composite (11, 111).

3. Procédé de test d'étanchéité selon la revendication 2, dans lequel la couche adhésive (21, 121) est une couche de colle de polyuréthane.

4. Procédé de test d'étanchéité selon l'une des revendications 1 à 3, dans lequel la première bande de mastic étanche (17, 117) est adhésive et dans lequel la deuxième bande de mastic étanche (18, 118) est adhésive.

5. Procédé de test d'étanchéité selon l'une des revendications 1 à 4, dans lequel la première bande de mastic étanche (17, 117) est en caoutchouc synthétique et dans lequel la deuxième bande de mastic étanche (18, 118) est en caoutchouc synthétique.

6. Procédé de test d'étanchéité selon l'une des revendications 1 à 5, dans lequel la bâche de film polymère (12) est dans un matériau choisi parmi le vinyle, le nylon et le polyéthylène.

7. Procédé de test d'étanchéité selon l'une des revendications 1 à 6, comportant en outre une étape de positionner un écran (22, 34) couvrant un interstice entre la barrière thermiquement isolante (1) et la surface de support (13) afin d'empêcher la bâche de film polymère (12) de se positionner dans ledit interstice lors de la mise en dépression de l'espace clos (19).

8. Procédé de test d'étanchéité selon l'une des revendications 1 à 6, comportant en outre une étape de positionner une cornière de protection (35) comportant une première aile plane et une deuxième aile plane de sorte que la première aile plane soit disposée contre la membrane d'étanchéité (2) et que la deuxième aile plane longe un bord de la barrière thermiquement isolante (1) et fasse saillie en direction de la surface de support (13).

9. Procédé de test d'étanchéité selon l'une des revendications 1 à 8, dans lequel un tissu de renforcement (23) est fixé à la bâche de film polymère (12), la bâche étant fixée de manière à ce que le tissu de renforcement (23) soit positionné dans l'espace clos (19) au niveau d'un angle formé par la barrière thermiquement isolante (1).

10. Procédé de test d'étanchéité selon l'une des revendications 1 à 9 comportant en outre une étape d'application d'une force d'appui en direction de la surface de support (13, 113) sur la couverture étanche (12, 133, 144) au droit de la première bande de mastic étanche (17, 117) et au droit de la deuxième bande de mastic étanche (18, 118).

11. Procédé de test d'étanchéité selon l'une des revendications 1 à 10, comportant en outre une étape de fixer une contre-forme (33, 133) au niveau d'un angle de la barrière thermiquement isolante (1, 101) de sorte que ladite contre-forme (33, 133) recouvre ledit angle, la contre-forme (33, 133) étant liée de manière étanche d'une part sur la surface de support (13, 113) et, d'autre part, à la membrane d'étanchéité (2, 102).

12. Procédé de test d'étanchéité selon la revendication 11, dans lequel la contre-forme (33) est fabriquée par moulage in situ sur l'angle de la barrière thermiquement isolante (1).

13. Procédé de test d'étanchéité selon l'une quelconque des revendications 1 à 12, comportant une étape de positionner un dispositif de raccordement comportant une cornière de raccordement (36) et une bride de raccordement (37) disposée en regard d'un orifice ménagé dans ladite cornière de raccordement (36), ladite cornière de raccordement (36) étant liée de manière étanche à la surface de support (13), à la membrane d'étanchéité (2) et à la couverture étanche (2) et la bride de raccordement (36) étant raccordé de manière étanche à un moyen de mise en dépression (31) de l'espace clos (19).

14. Procédé de test d'étanchéité selon la revendication 13, dans lequel la cornière de raccordement (36) est fabriquée par moulage in situ sur la barrière thermiquement isolante (1), la bride de raccordement (37) étant prise dans la masse de la cornière de raccordement (36) lors de son moulage.

15. Dispositif d'étanchéité pour mettre en œuvre le procédé de la revendication 1, en fermant un espace clos (19, 119) défini entre une membrane d'étanchéité (2, 102) fixée sur une barrière thermiquement isolante (1, 101) ancrée à une surface de support (13, 113) et ladite surface de support (13, 113) ; le dispositif d'étanchéité comportant
- une couverture étanche (12, 133, 144) liée de manière étanche à, d'une part, la membrane d'étanchéité (2, 102) au moyen d'une première bande de mastic étanche (17, 117) et, d'autre part, à la surface de support (13, 113) au moyen d'une deuxième bande de mastic étanche (18, 118), la couverture étanche étant une bâche de film polymère (12), et
- une pompe à vide reliée à l'espace clos (19, 119) et apte à mettre en dépression ledit espace clos (19, 119).

16. Dispositif d'étanchéité selon la revendication 15, dans lequel la couverture étanche comporte une bâche de film polymère (12), le dispositif d'étanchéité comportant en outre un écran (22) couvrant un interstice entre la barrière thermiquement isolante (1) et la surface de support (13) de manière à obstruer ledit interstice et empêcher l'insertion de la bâche de film polymère (12) dans ledit interstice en présence d'une dépression dans l'espace clos (19).

17. Dispositif d'étanchéité selon la revendication 15 ou 16, comportant en outre un dispositif de bridage (25) agencé pour exercer une force d'appui en direction de la surface de support (13, 113) sur la couverture étanche (12, 133, 144) au droit des première et deuxième bandes de mastic étanches.

## Patentansprüche

1. Verfahren zum Prüfen der Dichtheit einer Dichtungsmembran (2, 102), die an einer thermisch isolierenden Sperrschicht (1, 101) befestigt ist, wobei die thermisch isolierende Sperrschicht (1, 101) auf einer dichten Auflagefläche (13, 113) aufliegt, das Verfahren umfassend:
- Anbringen eines ersten Mastix-Dichtungsbands (17, 117) an der Dichtungsmembran (2, 102),
- Anbringen eines zweiten Mastix-Dichtungsbands (18, 118) an der Auflagefläche (13, 113) rund um die Dichtungsmembran (2, 102),
- Anordnen einer dichten Abdeckung (12, 144, 133) an dem ersten Mastix-Dichtungsband (17, 117) und an dem zweiten Mastix-Dichtungsband (18, 118), so dass die dichte Abdeckung (12, 144, 133) durch das erste Mastix-Dichtungsband (17, 117) mit der Dichtungsmembran (2, 102) einerseits dichtend verbunden ist und die dichte Abdeckung (12, 144, 133) durch das zweite Mastix-Dichtungsband (18, 118) mit der Auflagefläche (13, 113) andererseits dichtend verbunden ist, wobei die dichte Abdeckung (12, 144, 133), die Auflagefläche (13, 113), das erste Mastix-Dichtungsband (17, 117), das zweite Mastix-Dichtungsband (18, 118) und die Dichtungsmembran (2, 102) gemeinsam einen geschlossenen Raum (19, 119) begrenzen, wobei die dichte Abdeckung eine Polymerfolienbahn (12) ist;
- Beaufschlagen des geschlossenen Raums (19, 119) mit Unterdruck gegenüber einer Außenumgebung des geschlossenen Raums (19, 119); und
- Messen eines Parameters, der für die Druckentwicklung im Inneren des geschlossenen Raums (19, 119) nach dem Beaufschlagen des geschlossenen Raums (19, 119) mit Unterdruck repräsentativ ist.

2. Verfahren zum Prüfen der Dichtheit nach Anspruch 1,
wobei die Dichtungsmembran (2, 102) mindestens einen dichten Verbundfolienabschnitt (11, 111) umfasst, wobei das Verfahren außerdem einen Schritt zum Aufbringen einer Klebeschicht (21, 121) auf eine Seite des mindestens einen Verbundfolienabschnitts (111, 11) umfasst, so dass die Klebeschicht (21, 121) in den Verbundfolienabschnitt (11, 111) eindringt, wobei das erste Mastix-Dichtungsband (17, 117) auf die genannte Seite des wenigstens einen Verbundfolienabschnitts (11, 111) aufgebracht wird.

3. Verfahren zum Prüfen der Dichtheit nach Anspruch 2,
wobei die Klebeschicht (21, 121) eine Polyurethan-Klebeschicht ist.

4. Verfahren zum Prüfen der Dichtheit nach einem der Ansprüche 1 bis 3, wobei das erste Mastix-Dichtungsband (17, 117) haftend ist und wobei das zweite Mastix-Dichtungsband (18, 118) haftend ist.

5. Verfahren zum Prüfen der Dichtheit nach einem der Ansprüche 1 bis 4, wobei das erste Mastix-Dichtungsband (17, 117) aus synthetischem Gummi besteht und wobei das zweite Mastix-Dichtungsband (18, 118) aus synthetischem Gummi besteht.

6. Verfahren zum Prüfen der Dichtheit nach einem der Ansprüche 1 bis 5, wobei die Polymerfolienbahn (12) aus einem Material besteht, das ausgewählt ist aus Vinyl, Nylon und Polyethylen.

7. Verfahren zum Prüfen der Dichtheit nach einem der Ansprüche 1 bis 6, ferner umfassend einen Schritt des Anbringens einer Abschirmung (22, 34), die einen Spalt zwischen der thermisch isolierenden Sperrschicht (1) und der Auflagefläche (13) abdeckt, um zu verhindern, dass sich die Polymerfolienbahn (12), wenn der geschlossene Raum (19) mit Unterdruck beaufschlagt wird, in diesem Spalt positioniert.

8. Verfahren zum Prüfen der Dichtheit nach einem der Ansprüche 1 bis 6, ferner umfassend einen Schritt des Positionierens einer Schutzleiste (35) mit einem ersten flachen Flügel und einem zweiten flachen Flügel, derart, dass der erste flache Flügel an der Dichtungsmembran (2) anliegt und der zweite flache Flügel entlang einer Kante der thermisch isolierenden Sperrschicht (1) in Richtung der Auflagefläche (13) vorsteht.

9. Verfahren zum Prüfen der Dichtheit nach einem der Ansprüche 1 bis 8, wobei ein Verstärkungsgewebe (23) an der Polymerfolienbahn (12) befestigt wird, wobei die Bahn derart befestigt wird, dass das Verstärkungsgewebe (23) in dem geschlossenen Raum (19) an einer Ecke positioniert wird, die durch die thermisch isolierende Sperrschicht (1) gebildet wird.

10. Verfahren zum Prüfen der Dichtheit nach einem der Ansprüche 1 bis 9, ferner umfassend einen Schritt des Aufbringens einer Stützkraft in Richtung der Auflagefläche (13, 113) auf die dichte Abdeckung (12, 133, 144) im Bereich des ersten Mastix-Dichtungsbands (17, 117) und im Bereich des zweiten Mastix-Dichtungsbands (18, 118).

11. Verfahren zum Prüfen der Dichtheit nach einem der Ansprüche 1 bis 10, ferner umfassend einen Schritt des Anbringens einer Gegenform (33, 133) an einer Ecke der thermisch isolierenden Sperrschicht (1, 101), derart, dass die Gegenform (33, 133) die Ecke abdeckt, wobei die Gegenform (33, 133) einerseits dichtend mit der Auflagefläche (13, 113) und andererseits mit der Dichtmembran (2, 102) verbunden ist.

12. Verfahren zum Prüfen der Dichtheit nach Anspruch 11,
wobei die Gegenform (33) durch Formguss vor Ort an der Ecke der thermisch isolierenden Sperrschicht (1) hergestellt wird.

13. Verfahren zum Prüfen der Dichtheit nach einem der Ansprüche 1 bis 12, umfassend einen Schritt des Positionierens einer Verbindungseinrichtung an der Dichtungsmembran (2) und an der dichten Abdeckung (2), die Verbindungseinrichtung umfassend einen Verbindungswinkel (36) und einen Verbindungsflansch (37), der einer Öffnung in dem Verbindungswinkel (36) gegenüberliegend angeordnet ist, wobei der Verbindungswinkel (36) dichtend mit der Auflagefläche (13) verbunden ist, wobei der Verbindungsflansch (36) dichtend mit einer Einrichtung (31) zur Beaufschlagung des geschlossenen Raums (19) mit Unterdruck verbunden ist.

14. Verfahren zum Prüfen der Dichtheit nach Anspruch 13,
wobei der Verbindungswinkel (36) durch Formguss vor Ort an der thermisch isolierenden Sperrschicht (1) hergestellt wird, wobei der Verbindungsflansch (37) beim Gießen in die Masse des Verbindungswinkels (36) eingegossen wird.

15. Dichtungsvorrichtung zur Durchführung des Verfahrens nach Anspruch 1, wobei ein geschlossener Raum (19, 119), der zwischen einer Dichtungsmembran (2, 102), die an einer an einer Auflagefläche (13, 113) verankerten thermisch isolierenden Sperrschicht (1, 101) befestigt ist, und der Auflagefläche (13, 113) definiert ist, verschlossen wird;
die Dichtungsvorrichtung umfassend
- eine dichte Abdeckung (12, 133, 144), die mittels eines ersten Mastix-Dichtungsbands (17, 117) einerseits mit der Dichtungsmembran (2, 102) dichtend verbunden ist und mittels eines zweiten Mastix-Dichtungsbands (18, 118) andererseits mit der Auflagefläche (13, 113) dichtend verbunden ist, wobei die dichte Abdeckung eine Polymerfolienbahn (12) ist, und
- eine Vakuumpumpe, die mit dem geschlossenen Raum (19, 119) verbunden ist und geeignet ist, den geschlossenen Raum (19, 119) mit Unterdruck zu beaufschlagen.

16. Dichtungsvorrichtung nach Anspruch 15, wobei die dichte Abdeckung eine Polymerfolienbahn (12) umfasst, wobei die Dichtungsvorrichtung ferner eine Abschirmung (22) umfasst, die einen Zwischenraum zwischen der thermisch isolierenden Sperrschicht (1) und der Auflagefläche (13) derart abschirmt, dass der Zwischenraum versperrt wird und verhindert wird, dass die Polymerfolienbahn (12) bei einem vorhandenen Unterdruck in dem geschlossenen Raum (19) in den Zwischenraum gelangt.

17. Dichtungsvorrichtung nach Anspruch 15 oder 16, ferner umfassend eine Klemmeinrichtung (25), die dazu ausgebildet ist, eine Stützkraft in Richtung der Auflagefläche (13, 113) auf die dichte Abdeckung (12, 133, 144) im Bereich des ersten und des zweiten Mastix-Dichtungsbands auszuüben.

## Claims

1. A method for testing the seal of a sealing membrane (2, 102), the sealing membrane (2, 102) being fixed to a thermally insulating barrier (1, 101), the thermally insulating barrier (1, 101) resting on a sealed supporting surface (13, 113), the method comprising:
- applying a first strip of sealing compound (17, 117) to the sealing membrane (2, 102);
- applying a second strip of sealing compound (18, 118) to the supporting surface (13, 113) around the sealing membrane (2, 102),
- disposing a sealed cover (12, 144, 133) on the first strip of sealed mastic (17, 117) and on the second strip of sealed mastic (18, 118) so that on the one hand the sealed cover (12, 144, 133) is connected in sealed manner to the sealing membrane (2, 102) by the first strip of sealed mastic (17, 117) and, on the other hand, the sealed cover (12, 144, 133) is connected in sealed manner to the supporting surface (13, 113) by the second strip of sealing compound (18, 118), the sealed cover (12, 144, 133), the supporting surface (13, 113), the first strip of sealing compound (17, 117), the second strip of sealing compound (18, 118) and the sealing membrane (2, 102) together defining an enclosed space (19, 119), the sealed cover being a polymer film tarpaulin (12),
- depressurizing the enclosed space (19, 119) with respect to an environment outside said enclosed space (19, 119); and
- measuring a parameter representing the variation of the pressure inside the enclosed space (19, 119) after said enclosed space (19, 119) has been depressurized.

2. The seal test method as claimed in claim 1, in which the sealing membrane (2, 102) includes at least one composite sealed film portion (11, 111), the method further including a step of application of an adhesive layer (21, 121) to a face of said at least one composite film portion (111, 11) in such a manner that said adhesive layer (21, 121) is impregnated in the composite film portion (11, 111), the first strip of sealing compound (17, 117) being applied to said face of said at least one composite film portion (11, 111).

3. The seal test method as claimed in claim 2, in which the adhesive layer (21, 121) is a layer of polyurethane glue.

4. The seal test method as claimed in any one of claims 1 to 3, in which the first strip of sealing compound (17, 117) is adhesive and in which the second strip of sealing compound (18, 118) is adhesive.

5. The seal test method as claimed in any one of claims 1 to 4, in which first strip of sealing compound (17, 117) is made of synthetic rubber and in which the second strip of sealing compound (18, 118) is made of synthetic rubber.

6. The seal test method as claimed in any one of claims 1 to 5, in which the polymer film tarpaulin (12) is made of a material chosen from vinyl, nylon and polyethylene.

7. The seal test method as claimed in any one of claims 1 to 6, further including a step of positioning a screen (22, 34) covering an interstice between the thermally insulating barrier (1) and the supporting surface (13) in order to prevent the polymer film tarpaulin (12) from being positioned in said interstice during the depressurization of the enclosed space (19).

8. The seal test method as claimed in any one of claims 1 to 6, further including a step of positioning a protection angle-iron (35) including a first plane flange and a second plane flange so that the first plane flange is disposed against the sealing membrane (2) and the second plane flange extends along an edge of the thermally insulating barrier (1) and projects in the direction of the supporting surface (13).

9. The seal test method as claimed in any one of claims 1 to 8, in which a reinforcing fabric (23) is fixed to the polymer film tarpaulin (12), the tarpaulin being fixed in such a manner that the reinforcing fabric (23) is positioned in the enclosed space (19) at the level of a corner formed by the thermally insulating barrier (1).

10. The seal test method as claimed in any one of claims 1 to 9 further including a step of application of a bearing force in the direction of the supporting surface (13, 113) to the sealed cover (12, 133, 144) in line with the first strip of sealing compound (17, 117) and in line with the second strip of sealing compound (18, 118).

11. The seal test method as claimed in any one of claims 1 to 10, further including a step of fixing a caul sheet (33, 133) at the level of a corner of the thermally insulating barrier (1, 101) so that said caul sheet (33, 133) covers said corner, the caul sheet (33, 133) being connected in sealed manner on the one hand to the supporting surface (13, 113) and, on the other hand, to the sealing membrane (2, 102).

12. The seal test method as claimed in claim 11, in which the caul sheet (33) is made by molding in situ in the corner of the thermally insulating barrier (1).

13. The seal test method as claimed in any one of claims 1 to 12, including a step of positioning a connecting device including a connecting angle-iron (36) and a connecting flange (37) disposed facing an orifice formed in said connecting angle-iron (36), said connecting angle-iron (36) being connected in sealed manner to the supporting surface (13), to the sealing membrane (2) and to the sealed cover (2) and the connecting flange (36) being connected in sealed manner to a means (31) for depressurizing the enclosed space (19).

14. The seal test method as claimed in claim 13, in which the connecting angle-iron (36) is made by molding it in situ on the thermally insulating barrier (1), the connecting flange (37) being embedded in the mass of the connecting angle-iron (36) during molding thereof.

15. A sealing device for closing an enclosed space (19, 119) defined between a sealing membrane (2, 102) fixed to a thermally insulating barrier (1, 101) anchored to a supporting surface (13, 113) and said supporting surface (13, 113); the sealing device including
- a sealed cover (12, 133, 144) connected in sealed manner too, on the one hand, the sealing membrane (2, 102) by means of a first strip of sealing compound (17, 117) and, on the other hand, to the supporting surface (13, 113) by means of a second strip of sealing compound (18, 118), the sealed cover being a polymer film tarpaulin (12), and
- a vacuum pump connected to the enclosed space (19, 119) and able to depressurize said enclosed space (19, 119).

16. The sealing device as claimed in claim 15, in which the sealed cover includes a polymer film tarpaulin (12), the sealing device further including a screen (22) covering an interstice between the thermally insulating barrier (1) and the supporting surface (13) in such a manner as to block said interstice and to prevent the insertion of the polymer film tarpaulin (12) in said interstice in the presence of depressurization of the enclosed space (19).

17. The sealing device as claimed in claim 15 or 16, further including a clamping device (25) adapted to exert a bearing force in the direction of the supporting surface (13, 113) on the sealed cover (12, 133, 144) in line with the first and second strips of sealing compound.
